# EUROPEAN PATENT APPLICATION

(11) **EP 4 106 368 A1**
(43) Date of publication of application: **21.12.2022**
(21) Application number: 21753868.5
(22) Date of filing: 08.02.2021
(51) Int. Cl.: H04W 4/90, H04W 68/12

(54) **COMMUNICATION SYSTEM, COMMUNICATION TERMINAL, AND NETWORK**

(30) Priority: 10.02.2020 JP 2020020469
(71) Applicant: MITSUBISHI ELECTRIC CORPORATION, Chiyoda-ku Tokyo 100-8310 (JP)
(72) Inventor: SHIMODA Tadahiro, Tokyo 100-8310 (JP); MOCHIZUKI Mitsuru, Tokyo 100-8310 (JP); NAKAZAWA Masayuki, Tokyo 100-8310 (JP); TAIRA Akinori, Tokyo 100-8310 (JP); HASEGAWA Fumihiro, Tokyo 100-8310 (JP)
(74) Representative: Sajda, Wolf E.
(86) International application number: PCT/JP2021/004583
(87) International publication number: WO 2021/161958

(57) **Abstract**

A communication system includes a communication terminal, and a plurality of networks configured to perform radio communication with the communication terminal. A priority of at least one of a paging timing and a paging type is assigned to a paging to be transmitted from each of the plurality of networks. The communication terminal selects a corresponding one of the pagings to be received, based on the priority.

## Description

### Technical Field

The present invention relates to a radio communication technology.

### Background Art

The 3rd generation partnership project (3GPP), the standard organization regarding the mobile communication system, is studying communication systems referred to as long term evolution (LTE) regarding radio sections and system architecture evolution (SAE) regarding the overall system configuration including a core network and a radio access network which is hereinafter collectively referred to as a network as well (for example, see Non-Patent Documents 1 to 5). This communication system is also referred to as 3.9 generation (3.9 G) system.

As the access scheme of the LTE, orthogonal frequency division multiplexing (OFDM) is used in a downlink direction and single carrier frequency division multiple access (SC-FDMA) is used in an uplink direction. Further, differently from the wideband code division multiple access (W-CDMA), circuit switching is not provided but a packet communication system is only provided in the LTE.

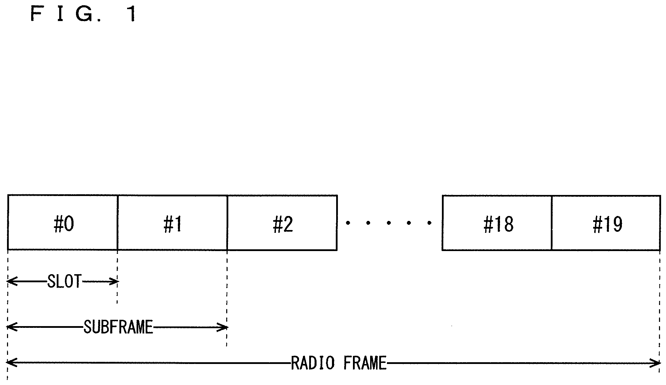

The decisions taken in 3GPP regarding the frame configuration in the LTE system described in Non-Patent Document 1 (Chapter 5) are described with reference to FIG. 1. FIG. 1 is a diagram illustrating the configuration of a radio frame used in the LTE communication system. With reference to FIG. 1, one radio frame is 10 ms. The radio frame is divided into ten equally sized subframes. The subframe is divided into two equally sized slots. The first and sixth subframes contain a downlink synchronization signal per radio frame. The synchronization signals are classified into a primary synchronization signal (P-SS) and a secondary synchronization signal (S-SS).

Non-Patent Document 1 (Chapter 5) describes the decisions by 3GPP regarding the channel configuration in the LTE system. It is assumed that the same channel configuration is used in a closed subscriber group (CSG) cell as that of a non-CSG cell.

A physical broadcast channel (PBCH) is a channel for downlink transmission from a base station device (hereinafter may be simply referred to as a "base station") to a communication terminal device (hereinafter may be simply referred to as a "communication terminal") such as a user equipment device (hereinafter may be simply referred to as a "user equipment"). A BCH transport block is mapped to four subframes within a 40 ms interval. There is no explicit signaling indicating 40 ms timing.

A physical control format indicator channel (PCFICH) is a channel for downlink transmission from a base station to a communication terminal. The PCFICH notifies the number of orthogonal frequency division multiplexing (OFDM) symbols used for PDCCHs from the base station to the communication terminal. The PCFICH is transmitted per subframe.

A physical downlink control channel (PDCCH) is a channel for downlink transmission from a base station to a communication terminal. The PDCCH notifies of the resource allocation information for downlink shared channel (DL-SCH) being one of the transport channels described below, resource allocation information for a paging channel (PCH) being one of the transport channels described below, and hybrid automatic repeat request (HARQ) information related to DL-SCH. The PDCCH carries an uplink scheduling grant. The PDCCH carries acknowledgment (Ack) / negative acknowledgment (Nack) that is a response signal to uplink transmission. The PDCCH is referred to as an L1/L2 control signal as well.

A physical downlink shared channel (PDSCH) is a channel for downlink transmission from a base station to a communication terminal. A downlink shared channel (DL-SCH) that is a transport channel and a PCH that is a transport channel are mapped to the PDSCH.

A physical multicast channel (PMCH) is a channel for downlink transmission from a base station to a communication terminal. A multicast channel (MCH) that is a transport channel is mapped to the PMCH.

A physical uplink control channel (PUCCH) is a channel for uplink transmission from a communication terminal to a base station. The PUCCH carries Ack/Nack that is a response signal to downlink transmission. The PUCCH carries channel state information (CSI). The CSI includes a rank indicator (RI), a precoding matrix indicator (PMI), and a channel quality indicator (CQI) report. The RI is rank information of a channel matrix in the MIMO. The PMI is information of a precoding weight matrix to be used in the MIMO. The CQI is quality information indicating the quality of received data or channel quality. In addition, the PUCCH carries a scheduling request (SR).

A physical uplink shared channel (PUSCH) is a channel for uplink transmission from a communication terminal to a base station. An uplink shared channel (UL-SCH) that is one of the transport channels is mapped to the PUSCH.

A physical hybrid ARQ indicator channel (PHICH) is a channel for downlink transmission from a base station to a communication terminal. The PHICH carries Ack/Nack that is a response signal to uplink transmission. A physical random access channel (PRACH) is a channel for uplink transmission from the communication terminal to the base station. The PRACH carries a random access preamble.

A downlink reference signal (RS) is a known symbol in the LTE communication system. The following five types of downlink reference signals are defined as: a cell-specific reference signal (CRS), an MBSFN reference signal, a data demodulation reference signal (DM-RS) being a UE-specific reference signal, a positioning reference signal (PRS), and a channel state information reference signal (CSI-RS). The physical layer measurement objects of a communication terminal include reference signal received powers (RSRPs).

An uplink reference signal is also a known symbol in the LTE communication system. The following two types of uplink reference signals are defined, that is, a data demodulation reference signal (DM-RS) and a sounding reference signal (SRS).

The transport channels described in Non-Patent Document 1 (Chapter 5) are described. A broadcast channel (BCH) among the downlink transport channels is broadcast to the entire coverage of a base station (cell). The BCH is mapped to the physical broadcast channel (PBCH).

Retransmission control according to a hybrid ARQ (HARQ) is applied to a downlink shared channel (DL-SCH). The DL-SCH can be broadcast to the entire coverage of the base station (cell). The DL-SCH supports dynamic or semi-static resource allocation. The semi-static resource allocation is also referred to as persistent scheduling. The DL-SCH supports discontinuous reception (DRX) of a communication terminal for enabling the communication terminal to save power. The DL-SCH is mapped to the physical downlink shared channel (PDSCH).

The paging channel (PCH) supports DRX of the communication terminal for enabling the communication terminal to save power. The PCH is required to be broadcast to the entire coverage of the base station (cell). The PCH is mapped to physical resources such as the physical downlink shared channel (PDSCH) that can be used dynamically for traffic.

The multicast channel (MCH) is used for broadcasting the entire coverage of the base station (cell). The MCH supports SFN combining of multimedia broadcast multicast service (MBMS) services (MTCH and MCCH) in multi-cell transmission. The MCH supports semi-static resource allocation. The MCH is mapped to the PMCH.

Retransmission control according to a hybrid ARQ (HARQ) is applied to an uplink shared channel (UL-SCH) among the uplink transport channels. The UL-SCH supports dynamic or semi-static resource allocation. The UL-SCH is mapped to the physical uplink shared channel (PUSCH).

A random access channel (RACH) is limited to control information. The RACH involves a collision risk. The RACH is mapped to the physical random access channel (PRACH).

The HARQ is described. The HARQ is the technique for improving the communication quality of a channel by combination of automatic repeat request (ARQ) and error correction (forward error correction). The HARQ is advantageous in that error correction functions validly by retransmission even for a channel whose communication quality changes. In particular, it is also possible to achieve further quality improvement in retransmission through combination of the reception results of the first transmission and the reception results of the retransmission.

An example of the retransmission method is described. If the receiver fails to successfully decode the received data, in other words, if a cyclic redundancy check (CRC) error occurs (CRC = NG), the receiver transmits "Nack" to the transmitter. The transmitter that has received "Nack" retransmits the data. If the receiver successfully decodes the received data, in other words, if a CRC error does not occur (CRC = OK), the receiver transmits "Ack" to the transmitter. The transmitter that has received "Ack" transmits the next data.

The logical channels described in Non-Patent Document 1 (Chapter 6) are described. A broadcast control channel (BCCH) is a downlink channel for broadcast system control information. The BCCH that is a logical channel is mapped to the broadcast channel (BCH) or downlink shared channel (DL-SCH) that is a transport channel.

A paging control channel (PCCH) is a downlink channel for transmitting paging information and system information change notifications. The PCCH is used when the network does not know the cell location of a communication terminal. The PCCH that is a logical channel is mapped to the paging channel (PCH) that is a transport channel.

A common control channel (CCCH) is a channel for transmission control information between communication terminals and a base station. The CCCH is used in a case where the communication terminals have no RRC connection with the network. In the downlink direction, the CCCH is mapped to the downlink shared channel (DL-SCH) that is a transport channel. In the uplink direction, the CCCH is mapped to the uplink shared channel (UL-SCH) that is a transport channel.

A multicast control channel (MCCH) is a downlink channel for point-to-multipoint transmission. The MCCH is used for transmission of MBMS control information for one or several MTCHs from a network to a communication terminal. The MCCH is used only by a communication terminal during reception of the MBMS. The MCCH is mapped to the multicast channel (MCH) that is a transport channel.

A dedicated control channel (DCCH) is a channel that transmits dedicated control information between a communication terminal and a network on a point-to-point basis. The DCCH is used when the communication terminal has an RRC connection. The DCCH is mapped to the uplink shared channel (UL-SCH) in uplink and mapped to the downlink shared channel (DL-SCH) in downlink.

A dedicated traffic channel (DTCH) is a point-to-point communication channel for transmission of user information to a dedicated communication terminal. The DTCH exists in uplink as well as downlink. The DTCH is mapped to the uplink shared channel (UL-SCH) in uplink and mapped to the downlink shared channel (DL-SCH) in downlink.

A multicast traffic channel (MTCH) is a downlink channel for traffic data transmission from a network to a communication terminal. The MTCH is a channel used only by a communication terminal during reception of the MBMS. The MTCH is mapped to the multicast channel (MCH).

CGI represents a cell global identifier. ECGI represents an E-UTRAN cell global identifier. A closed subscriber group (CSG) cell is introduced into the LTE, and the long term evolution advanced (LTE-A) and universal mobile telecommunication system (UMTS) described below.

The locations of communication terminals are tracked based on an area composed of one or more cells. The locations are tracked for enabling tracking the locations of communication terminals and calling communication terminals, in other words, incoming calling to communication terminals even in an idle state. An area for tracking locations of communication terminals is referred to as a tracking area.

Further, specifications of long term evolution advanced (LTE-A) are pursued as Release 10 in 3GPP (see Non-Patent Documents 3 and 4). The LTE-A is based on the LTE radio communication system and is configured by adding several new techniques to the system.

Carrier aggregation (CA) is studied for the LTE-A system in which two or more component carriers (CCs) are aggregated to support wider transmission bandwidths up to 100 MHz. Non-Patent Document 1 describes the CA.

In a case where CA is configured, a UE has a single RRC connection with a network (NW). In RRC connection, one serving cell provides NAS mobility information and security input. This cell is referred to as a primary cell (PCell). In downlink, a carrier corresponding to PCell is a downlink primary component carrier (DL PCC). In uplink, a carrier corresponding to PCell is an uplink primary component carrier (UL PCC).

A secondary cell (SCell) is configured to form a serving cell group with a PCell, in accordance with the UE capability. In downlink, a carrier corresponding to SCell is a downlink secondary component carrier (DL SCC). In uplink, a carrier corresponding to SCell is an uplink secondary component carrier (UL SCC).

A serving cell group of one PCell and one or more SCells is configured for one UE.

The new techniques in the LTE-A include the technique of supporting wider bands (wider bandwidth extension) and the coordinated multiple point transmission and reception (CoMP) technique. The CoMP studied for LTE-A in 3GPP is described in Non-Patent Document 1.

Furthermore, the use of small eNBs (hereinafter also referred to as "small-scale base station devices") configuring small cells is studied in 3GPP to satisfy tremendous traffic in the future. In an example technique under study, a large number of small eNBs is installed to configure a large number of small cells, which increases spectral efficiency and communication capacity. The specific techniques include dual connectivity (abbreviated as DC) with which a UE communicates with two eNBs through connection thereto. Non-Patent Document 1 describes the DC.

For eNBs that perform dual connectivity (DC), one may be referred to as a master eNB (abbreviated as MeNB), and the other may be referred to as a secondary eNB (abbreviated as SeNB).

The traffic flow of a mobile network is on the rise, and the communication rate is also increasing. It is expected that the communication rate is further increased when the operations of the LTE and the LTE-A are fully initiated.

For increasingly enhanced mobile communications, the fifth generation (hereinafter also referred to as "5G") radio access system is studied whose service is aimed to be launched in 2020 and afterward. For example, in the Europe, an organization named METIS summarizes the requirements for 5G (see Non-Patent Document 5).

The requirements in the 5G radio access system show that a system capacity shall be 1000 times as high as, a data transmission rate shall be 100 times as high as, a data latency shall be one tenth (1/10) as low as, and simultaneously connected communication terminals 100 times as many as those of the LTE system, to further reduce the power consumption and device cost.

To satisfy such requirements, the study of 5G standards is pursued as Release 15 in 3GPP (see Non-Patent Documents 6 to 18). The techniques on 5G radio sections are referred to as "New Radio Access Technology" ("New Radio" is abbreviated as NR).

The NR system has been studied based on the LTE system and the LTE-A system. The NR system includes additions and changes from the LTE system and the LTE-A system in the following points.

As the access schemes of the NR, the orthogonal frequency division multiplexing (OFDM) is used in the downlink direction, and the OFDM and the DFT-spread-OFDM (DFT-s-OFDM) are used in the uplink direction.

In NR, frequencies higher than those in the LTE are available for increasing the transmission rate and reducing the latency.

In NR, a cell coverage is maintained by forming a transmission/reception range shaped like a narrow beam (beamforming) and also changing the orientation of the beam (beam sweeping).

In NR, various subcarrier spacings, that is, various numerologies are supported. Regardless of the numerologies, 1 subframe is 1 millisecond long, and 1 slot consists of 14 symbols in NR. Furthermore, the number of slots in 1 subframe is one in a numerology at a subcarrier spacing of 15 kHz. The number of slots increases in proportion to the subcarrier spacing in the other numerologies (see Non-Patent Document 13 (TS38.211 V16.0.0)).

The base station transmits a downlink synchronization signal in NR as synchronization signal burst (may be hereinafter referred to as SS burst) with a predetermined period for a predetermined duration. The SS burst includes synchronization signal blocks (may be hereinafter referred to as SS blocks) for each beam of the base station. The base station transmits the SS blocks for each beam during the duration of the SS burst with the beam changed. The SS blocks include the P-SS, the S-SS, and the PBCH.

In NR, addition of a phase tracking reference signal (PTRS) as a downlink reference signal has reduced the influence of phase noise. The PTRS has also been added as an uplink reference signal similarly to the downlink.

In NR, a slot format indication (SFI) has been added to information included in the PDCCH for flexibly switching between the DL and the UL in a slot.

Also in NR, the base station preconfigures, for the UE, a part of a carrier frequency band (may be hereinafter referred to as a Bandwidth Part (BWP)). Then, the UE performs transmission and reception with the base station in the BWP. Consequently, the power consumption in the UE is reduced.

The DC patterns studied in 3GPP include the DC to be performed between an LTE base station and an NR base station that are connected to the EPC, the DC to be performed by the NR base stations that are connected to the 5G core system, and the DC to be performed between the LTE base station and the NR base station that are connected to the 5G core system (see Non-Patent Documents 12, 16, and 19).

Furthermore, several new technologies have been studied in 3GPP. For example, operations of a terminal including a plurality of Subscriber Identity Modules (SIMs) have been studied (see Non-Patent Document 20).

### Prior-Art Documents

### Non-Patent Documents

Non-Patent Document 1: 3GPP TS 36.300 V16.0.0
Non-Patent Document 2: 3GPP S1-083461
Non-Patent Document 3: 3GPP TR 36.814 V9.2.0
Non-Patent Document 4: 3GPP TR 36.912 V15.0.0
Non-Patent Document 5: "Scenarios, requirements and KPIs for 5G mobile and wireless system", ICT-317669-METIS/D1.1
Non-Patent Document 6: 3GPP TR 23.799 V14.0.0
Non-Patent Document 7: 3GPP TR 38.801 V14.0.0
Non-Patent Document 8: 3GPP TR 38.802 V14.2.0
Non-Patent Document 9: 3GPP TR 38.804 V14.0.0
Non-Patent Document 10: 3GPP TR 38.912 V15.0.0
Non-Patent Document 11: 3GPP RP-172115
Non-Patent Document 12: 3GPP TS 37.340 V16.0.0
Non-Patent Document 13: 3GPP TS 38.211 V16.0.0
Non-Patent Document 14: 3GPP TS 38.213 V16.0.0
Non-Patent Document 15: 3GPP TS 38.214 V16.0.0
Non-Patent Document 16: 3GPP TS 38.300 V16.0.0
Non-Patent Document 17: 3GPP TS 38.321 V15.8.0
Non-Patent Document 18: 3GPP TS 38.212 V16.0.0
Non-Patent Document 19: 3GPP RP-161266
Non-Patent Document 20: 3GPP RP-193263
Non-Patent Document 21: 3GPP TS 23.041 V16.2.0
Non-Patent Document 22: 3GPP TS 38.331 V15.8.0
Non-Patent Document 23: 3GPP TR 22.832 V17.1.0
Non-Patent Document 24: 3GPP RP-192590
Non-Patent Document 25: 3GPP TR 23.734 V16.2.0
Non-Patent Document 26: 3GPP TS 38.304 V15.6.0
Non-Patent Document 27: 3GPP TS 23.501 V16.3.0
Non-Patent Document 28: 3GPP TS 23.287 V16.1.0
Non-Patent Document 29: 3GPP TS 38.322 V15.5.0
Non-Patent Document 30: 3GPP TS 38.323 V15.6.0
Non-Patent Document 31: 3GPP TS 23.288 V16.2.0
Non-Patent Document 32: 3GPP TS 24.501 V16.3.0

### Summary

### Problems to be Solved by the Invention

Operations of the UE including a plurality of SIMs have been studied in 3GPP. Examples of the studies include a countermeasure when two NWs overlap in paging timing for the UE, and a method for notifying a data type corresponding to the paging (see Non-Patent Document 20). However, none discloses a specific method for determining which paging transmitted from which NW should be received. For example, when colliding pagings include a paging for emergency communications such as the Earthquake and Tsunami Warning System (ETWS) and the Commercial Mobile Alert System (CMAS), the UE sometimes fails to receive the paging for the emergency communications. This consequently causes a problem that the UE cannot promptly receive the emergency communications.

In view of the problem, one of the objects of the present invention is to provide a technology for enabling a prompt NW connection.

### Means to Solve the Problems

A communication system according to the present invention includes: a communication terminal; and a plurality of networks configured to perform radio communication with the communication terminal, wherein a priority of at least one of a paging timing and a paging type is assigned to a paging to be transmitted from each of the plurality of networks, and the communication terminal selects a corresponding one of the pagings to be received, based on the priority.

A communication terminal according to the present invention is a communication terminal configured to perform radio communication with a plurality of networks, wherein a priority of at least one of a paging timing and a paging type is assigned to a paging to be transmitted from each of the plurality of networks, and the communication terminal selects a corresponding one of the pagings to be received, based on the priority.

A network according to the present invention is a network configured to perform radio communication with a communication terminal, wherein priorities of a paging timing and a paging type are assigned to a paging to be transmitted from the network, the priority of the paging timing is associated with the priority of the paging type, and the network selects a paging to be transmitted, based on the association between the priority of the paging timing and the priority of the paging type.

### Effects of the Invention

The present invention enables a prompt NW connection.

The object, features, aspects and advantages of the present invention will become more apparent from the following detailed description and the accompanying drawings of the present invention.

### Brief Description of Drawings

- FIG. 1: is a diagram illustrating the configuration of a radio frame for use in an LTE communication system.
- FIG. 2: is a block diagram showing the overall configuration of an LTE communication system 200 under discussion of 3GPP.
- FIG. 3: is a block diagram illustrating an overall configuration of a NR communication system 210 that has been discussed in 3GPP. FIG. 4 illustrates a structure of the DC to be performed by an eNB and a gNB that are connected to the EPC. FIG. 5 illustrates a structure of the DC to be performed by gNBs that are connected to the NG core.
- FIG. 6: illustrates a structure of the DC to be performed by the eNB and the gNB that are connected to the NG core.
- FIG. 7: illustrates a structure of the DC to be performed by the eNB and the gNB that are connected to the NG core.
- FIG. 8: is a block diagram showing the configuration of a user equipment 202 shown in FIG. 2.
- FIG. 9: is a block diagram showing the configuration of a base station 203 shown in FIG. 2.
- FIG. 10: is a block diagram showing the configuration of an MME.
- FIG. 11: is a block diagram illustrating a configuration of the 5GC.
- FIG. 12: is a flowchart showing an outline from a cell search to an idle state operation performed by a communication terminal (UE) in LTE communication system.
- FIG. 13: illustrates an example structure of a cell in an NR system.
- FIG. 14: is an architecture diagram illustrating an example connection between a multi-SIM-mounted UE and a plurality of NWs according to the first embodiment.
- FIG. 15: illustrates the first example of assignment of timing priorities of pagings from a plurality of NWs and pagings to be received by the UE according to the first embodiment.
- FIG. 16: illustrates the second example of assignment of timing priorities of pagings from a plurality of NWs and pagings to be received by the UE according to the first embodiment.
- FIG. 17: is a sequence diagram illustrating example operations of stopping and resuming RLF timers when the UE switches a transmission/reception target according to the second embodiment.
- FIG. 18: is a diagram exemplifying provision of a priority offset in a logical channel with requirements of the survival time according to the first modification of the third embodiment.
- FIG. 19: is a diagram exemplifying implicit control on the number of packets to be duplicated in the logical channel with requirements of the survival time according to the second modification of the third embodiment.

### Description of Embodiments

### The First Embodiment

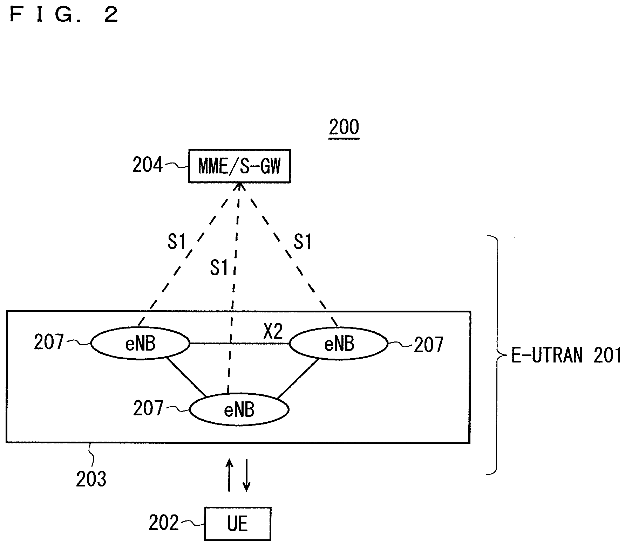

FIG. 2 is a block diagram showing an overall configuration of an LTE communication system 200 which is under discussion of 3GPP. FIG. 2 is described here. A radio access network is referred to as an evolved universal terrestrial radio access network (E-UTRAN) 201. A user equipment device (hereinafter, referred to as a "user equipment (UE)") 202 that is a communication terminal device is capable of radio communication with a base station device (hereinafter, referred to as a "base station (E-UTRAN Node B: eNB)") 203 and transmits and receives signals through radio communication.

Here, the "communication terminal device" covers not only a user equipment device such as a mobile phone terminal device, but also an unmovable device such as a sensor. In the following description, the "communication terminal device" may be simply referred to as a "communication terminal".

The E-UTRAN is composed of one or a plurality of base stations 203, provided that a control protocol for the user equipment 202 such as a radio resource control (RRC), and user planes (hereinafter also referred to as "U-planes") such as a packet data convergence protocol (PDCP), radio link control (RLC), medium access control (MAC), or physical layer (PHY) are terminated in the base station 203.

The control protocol radio resource control (RRC) between the user equipment 202 and the base station 203 performs, for example, broadcast, paging, and RRC connection management. The states of the base station 203 and the user equipment 202 in RRC are classified into RRC_IDLE and RRC_CONNECTED.

In RRC_IDLE, public land mobile network (PLMN) selection, system information (SI) broadcast, paging, cell reselection, mobility, and the like are performed. In RRC_CONNECTED, the user equipment has RRC connection and is capable of transmitting and receiving data to and from a network. In RRC_CONNECTED, for example, handover (HO) and measurement of a neighbor cell are performed.

The base stations 203 includes one or more eNBs 207. A system, composed of an evolved packet core (EPC) being a core network and an E-UTRAN 201 being a radio access network, is referred to as an evolved packet system (EPS). The EPC being a core network and the E-UTRAN 201 being a radio access network may be collectively referred to as a "network".

The eNB 207 is connected to an MME/S-GW unit (hereinafter, also referred to as an "MME unit") 204 including a mobility management entity (MME), a serving gateway (S-GW) or an MME and an S-GW by means of an S1 interface, and control information is communicated between the eNB 207 and the MME unit 204. A plurality of MME units 204 may be connected to one eNB 207. The eNBs 207 are connected to each other by means of an X2 interface, and control information is communicated between the eNBs 207.

The MME unit 204 is a high-level device, specifically, a high-level node, and controls connection between the user equipment (UE) 202 and the eNBs 207 comprising a base station. The MME unit 204 configures the EPC that is a core network. The base station 203 configures the E-UTRAN 201.

The base station 203 may configure one or more cells. Each of the cells has a predefined range as a coverage that is a range in which communication with the user equipment 202 is possible, and performs radio communication with the user equipment 202 within the coverage. When the one base station 203 configures a plurality of cells, each of the cells is configured to communicate with the user equipment 202.

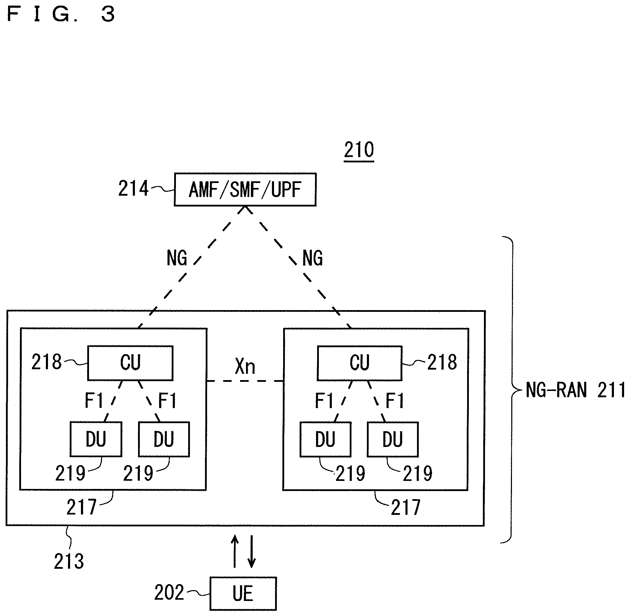

FIG. 3 is a block diagram illustrating an overall configuration of a 5G communication system 210 that has been discussed in 3GPP. FIG. 3 is described. A radio access network is referred to as a next generation radio access network (NG-RAN) 211. The UE 202 can perform radio communication with an NR base station device (hereinafter referred to as a "NR base station (NG-RAN NodeB (gNB))") 213, and transmits and receives signals to and from the NR base station 213 via radio communication. Furthermore, the core network is referred to as a 5G Core (5GC).

When control protocols for the UE 202, for example, Radio Resource Control (RRC) and user planes (may be hereinafter referred to as U-Planes), e.g., Service Data Adaptation Protocol (SDAP), Packet Data Convergence Protocol (PDCP), Radio Link Control (RLC), Medium Access Control (MAC), and Physical Layer (PHY) are terminated in the NR base station 213, one or more NR base stations 213 configure the NG-RAN.

The functions of the control protocol of the Radio Resource Control (RRC) between the UE 202 and the NR base station 213 are identical to those in LTE. The states of the NR base station 213 and the UE 202 in RRC include RRC_IDLE, RRC_CONNECTED, and RRC_INACTIVE.

RRC_IDLE and RRC_CONNECTED are identical to those in LTE. In RRC_INACTIVE, for example, broadcast of system information (SI), paging, cell reselection, and mobility are performed while the connection between the 5G Core and the NR base station 213 is maintained.

Through an NG interface, gNBs 217 are connected to the Access and Mobility Management Function (AMF), the Session Management Function (SMF), the User Plane Function (UPF), or an AMF/SMF/UPF unit (may be hereinafter referred to as a 5GC unit) 214 including the AMF, the SMF, and the UPF. The control information and/or user data are communicated between each of the gNBs 217 and the 5GC unit 214. The NG interface is a generic name for an N2 interface between the gNBs 217 and the AMF, an N3 interface between the gNBs 217 and the UPF, an N11 interface between the AMF and the SMF, and an N4 interface between the UPF and the SMF. A plurality of the 5GC units 214 may be connected to one of the gNBs 217. The gNBs 217 are connected through an Xn interface, and the control information and/or user data are communicated between the gNBs 217.

The NR base station 213 may configure one or more cells in the same manner as the base station 203. When the one NR base station 213 configures a plurality of cells, each of the cells is configured to communicate with the UE 202.

Each of the gNBs 217 may be divided into a Central Unit (may be hereinafter referred to as a CU) 218 and Distributed Units (may be hereinafter referred to as DUs) 219. The one CU 218 is configured in the gNB 217. The number of the DUs 219 configured in the gNB 217 is one or more. The CU 218 is connected to the DUs 219 via an F1 interface, and the control information and/or user data are communicated between the CU 218 and each of the DUs 219.

The 5G communication system may include the Unified Data Management (UDM) function and the Policy Control Function (PCF) described in Non-Patent Document 27 (3GPP TS23.501 V16.3.0). The UDM and/or the PCF may be included in the 5GC unit in FIG. 3.

The 5G communication system may include the Non-3GPP Interworking Function (N3IWF) described in Non-Patent Document 27 (3GPP TS23.501 V16.3.0). The N3IWF may terminate an Access Network (AN) with the UE in a non-3GPP access with the UE.

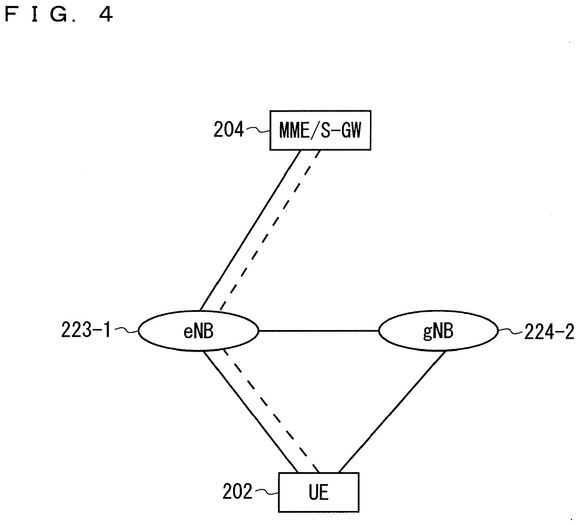

FIG. 4 illustrates a structure of the DC to be performed by an eNB and a gNB that are connected to the EPC. In FIG. 4, solid lines represent connection to the U-planes, and dashed lines represent connection to the C-planes. In FIG. 4, an eNB 223-1 becomes a master base station, and a gNB 224-2 becomes a secondary base station (this DC structure may be referred to as EN-DC). Although FIG. 4 illustrates an example U-Plane connection between the MME unit 204 and the gNB 224-2 through the eNB 223-1, the U-Plane connection may be established directly between the MME unit 204 and the gNB 224-2.

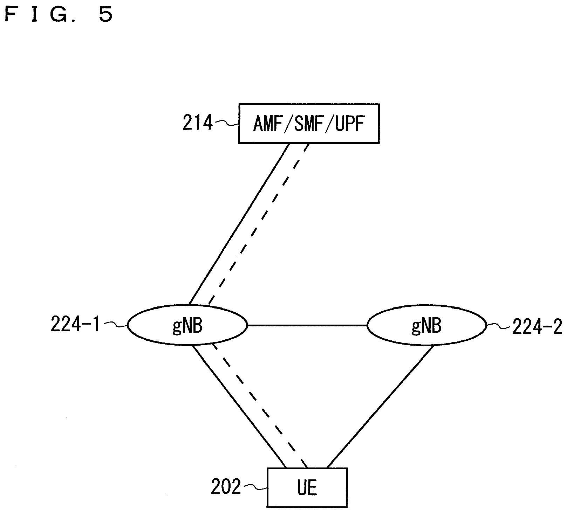

FIG. 5 illustrates a structure of the DC to be performed by gNBs that are connected to the NG core. In FIG. 5, solid lines represent connection to the U-planes, and dashed lines represent connection to the C-planes. In FIG. 5, a gNB 224-1 becomes a master base station, and the gNB 224-2 becomes a secondary base station (this DC structure may be referred to as NR-DC). Although FIG. 5 illustrates an example U-Plane connection between the 5GC unit 214 and the gNB 224-2 through the gNB 224-1, the U-Plane connection may be established directly between the 5GC unit 214 and the gNB 224-2.

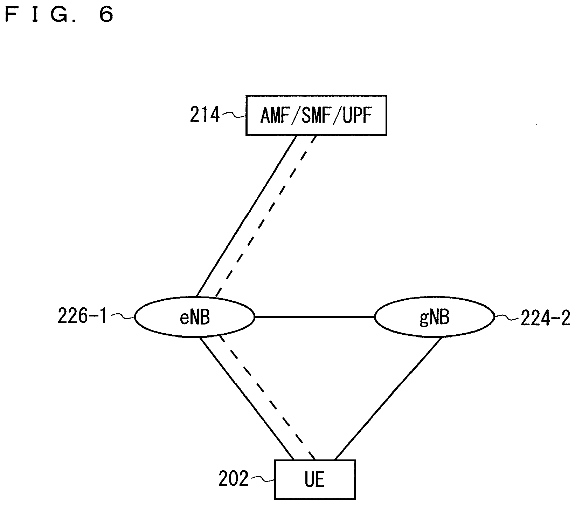

FIG. 6 illustrates a structure of the DC to be performed by an eNB and a gNB that are connected to the NG core. In FIG. 6, solid lines represent connection to the U-planes, and dashed lines represent connection to the C-planes. In FIG. 6, an eNB 226-1 becomes a master base station, and the gNB 224-2 becomes a secondary base station (this DC structure may be referred to as NG-EN-DC). Although FIG. 6 illustrates an example U-Plane connection between the 5GC unit 214 and the gNB 224-2 through the eNB 226-1, the U-Plane connection may be established directly between the 5GC unit 214 and the gNB 224-2.

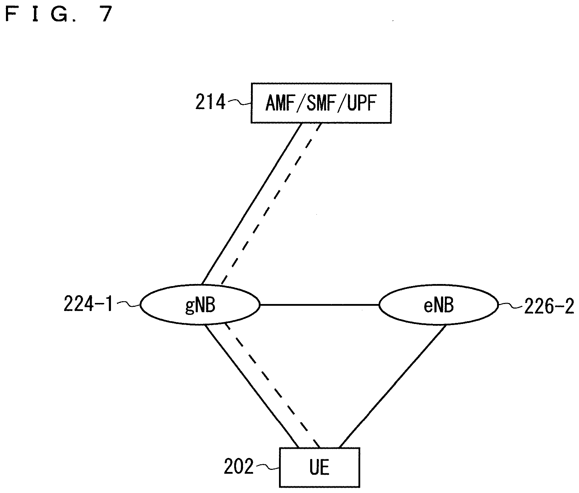

FIG. 7 illustrates another structure of the DC to be performed by an eNB and a gNB that are connected to the NG core. In FIG. 7, solid lines represent connection to the U-planes, and dashed lines represent connection to the C-planes. In FIG. 7, the gNB 224-1 becomes a master base station, and an eNB 226-2 becomes a secondary base station (this DC structure may be referred to as NE-DC). Although FIG. 7 illustrates an example U-Plane connection between the 5GC unit 214 and the eNB 226-2 through the gNB 224-1, the U-Plane connection may be established directly between the 5GC unit 214 and the eNB 226-2.

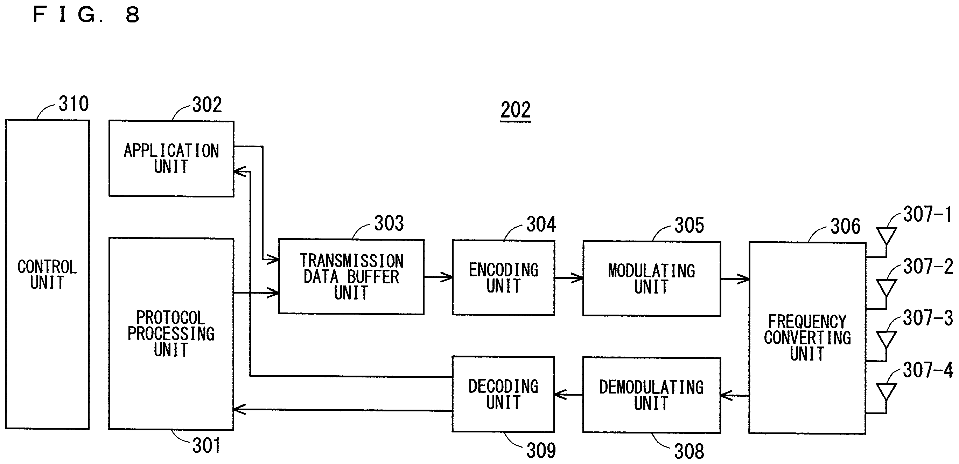

FIG. 8 is a block diagram showing the configuration of the user equipment 202 of FIG. 2. The transmission process of the user equipment 202 shown in FIG. 8 is described. First, a transmission data buffer unit 303 stores the control data from a protocol processing unit 301 and the user data from an application unit 302. The data stored in the transmission data buffer unit 303 is passed to an encoding unit 304, and is subjected to an encoding process such as error correction. There may exist the data output from the transmission data buffer unit 303 directly to a modulating unit 305 without the encoding process.

The data encoded by the encoding unit 304 is modulated by the modulating unit 305. The modulating unit 305 may perform precoding in the MIMO. The modulated data is converted into a baseband signal, and the baseband signal is output to a frequency converting unit 306 and is then converted into a radio transmission frequency. After that, transmission signals are transmitted from antennas 307-1 to 307-4 to the base station 203. Although FIG. 8 exemplifies a case where the number of antennas is four, the number of antennas is not limited to four.

The user equipment 202 executes the reception process as follows. The radio signal from the base station 203 is received through each of the antennas 307-1 to 307-4. The received signal is converted from a radio reception frequency into a baseband signal by the frequency converting unit 306 and is then demodulated by a demodulating unit 308. The demodulating unit 308 may calculate a weight and perform a multiplication operation. The demodulated data is passed to a decoding unit 309, and is subjected to a decoding process such as error correction.

Among the pieces of decoded data, the control data is passed to the protocol processing unit 301, and the user data is passed to the application unit 302. A series of processes by the user equipment 202 is controlled by a control unit 310. This means that, though not shown in FIG. 8, the control unit 310 is connected to the individual units 301 to 309. In FIG. 8, the number of antennas for transmission of the user equipment 202 may be identical to or different from that for its reception.

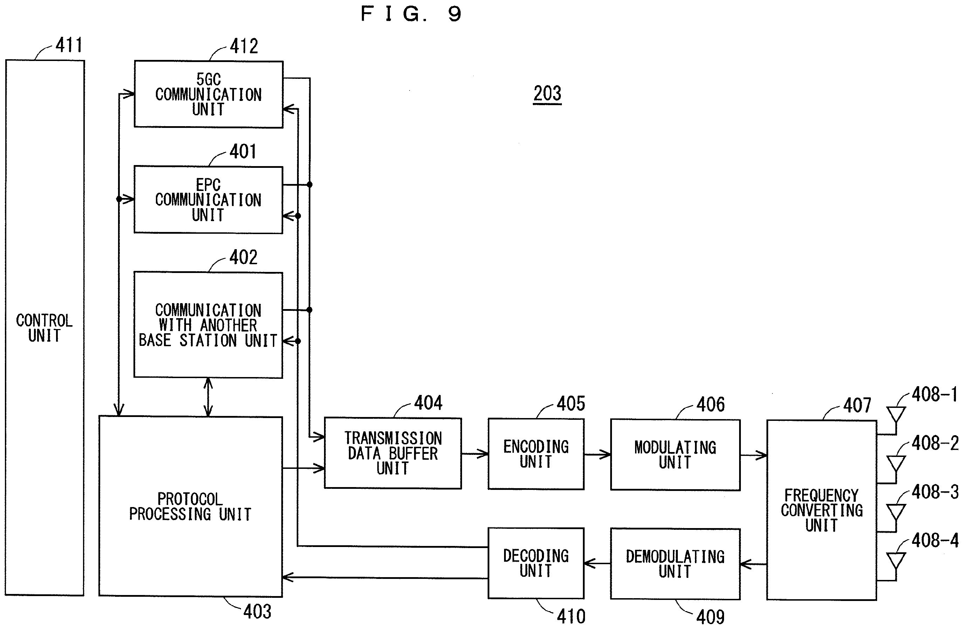

FIG. 9 is a block diagram showing the configuration of the base station 203 of FIG. 2. The transmission process of the base station 203 shown in FIG. 9 is described. An EPC communication unit 401 performs data transmission and reception between the base station 203 and the EPC (such as the MME unit 204). A 5GC communication unit 412 transmits and receives data between the base station 203 and the 5GC (e.g., the 5GC unit 214). A communication with another base station unit 402 performs data transmission and reception to and from another base station. The EPC communication unit 401, the 5GC communication unit 412, and the communication with another base station unit 402 each transmit and receive information to and from a protocol processing unit 403. The control data from the protocol processing unit 403, and the user data and the control data from the EPC communication unit 401, the 5GC communication unit 412, and the communication with another base station unit 402 are stored in a transmission data buffer unit 404.

The data stored in the transmission data buffer unit 404 is passed to an encoding unit 405, and then an encoding process such as error correction is performed for the data. There may exist the data output from the transmission data buffer unit 404 directly to a modulating unit 406 without the encoding process. The encoded data is modulated by the modulating unit 406. The modulating unit 406 may perform precoding in the MIMO. The modulated data is converted into a baseband signal, and the baseband signal is output to a frequency converting unit 407 and is then converted into a radio transmission frequency. After that, transmission signals are transmitted from antennas 408-1 to 408-4 to one or a plurality of user equipments 202. Although FIG. 9 exemplifies a case where the number of antennas is four, the number of antennas is not limited to four.

The reception process of the base station 203 is executed as follows. A radio signal from one or a plurality of user equipments 202 is received through the antenna 408. The received signal is converted from a radio reception frequency into a baseband signal by the frequency converting unit 407, and is then demodulated by a demodulating unit 409. The demodulated data is passed to a decoding unit 410 and then subject to a decoding process such as error correction. Among the pieces of decoded data, the control data is passed to the protocol processing unit 403, the 5GC communication unit 412, the EPC communication unit 401, or the communication with another base station unit 402, and the user data is passed to the 5GC communication unit 412, the EPC communication unit 401, and the communication with another base station unit 402. A series of processes by the base station 203 is controlled by a control unit 411. This means that, though not shown in FIG. 9, the control unit 411 is connected to the individual units 401 to 410. In FIG. 9, the number of antennas for transmission of the base station 203 may be identical to or different from that for its reception.

Although FIG. 9 is the block diagram illustrating the configuration of the base station 203, the base station 213 may have the same configuration. Furthermore, in FIGS. 8 and 9, the number of antennas of the user equipment 202 may be identical to or different from that of the base station 203 .

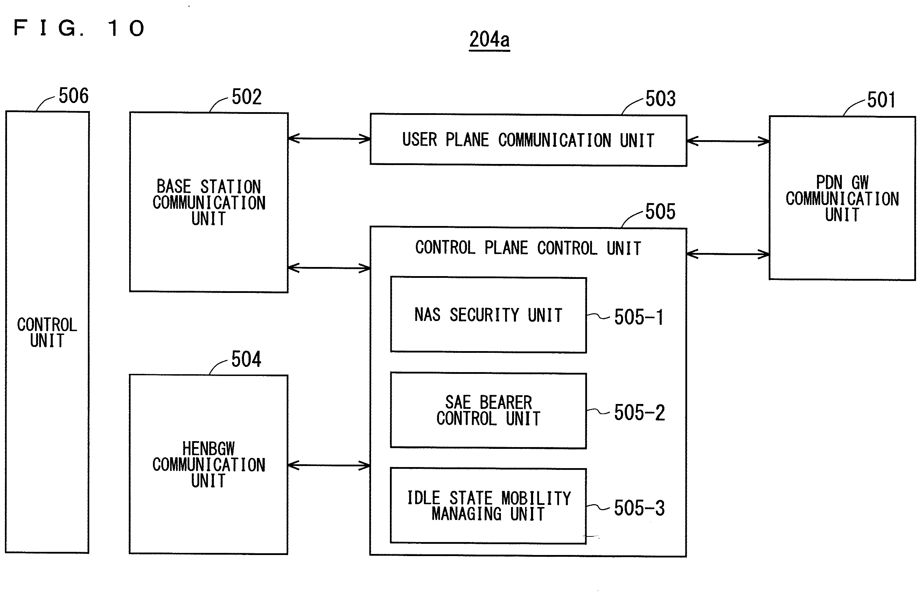

FIG. 10 is a block diagram showing the configuration of the MME. FIG. 10 shows the configuration of an MME 204a included in the MME unit 204 shown in FIG. 2 described above. A PDN GW communication unit 501 performs data transmission and reception between the MME 204a and the PDN GW. A base station communication unit 502 performs data transmission and reception between the MME 204a and the base station 203 by means of the S1 interface.

In a case where the data received from the PDN GW is user data, the user data is passed from the PDN GW communication unit 501 to the base station communication unit 502 via a user plane communication unit 503 and is then transmitted to one or a plurality of base stations 203. In a case where the data received from the base station 203 is user data, the user data is passed from the base station communication unit 502 to the PDN GW communication unit 501 via the user plane communication unit 503 and is then transmitted to the PDN GW.

In a case where the data received from the PDN GW is control data, the control data is passed from the PDN GW communication unit 501 to a control plane control unit 505. In a case where the data received from the base station 203 is control data, the control data is passed from the base station communication unit 502 to the control plane control unit 505.

The control plane control unit 505 includes a NAS security unit 505-1, an SAE bearer control unit 505-2, and an idle state mobility managing unit 505-3, and performs an overall process for the control plane (hereinafter also referred to as a "C-plane"). The NAS security unit 505-1 provides, for example, security of a non-access stratum (NAS) message. The SAE bearer control unit 505-2 manages, for example, a system architecture evolution (SAE) bearer. The idle state mobility managing unit 505-3 performs, for example, mobility management of an idle state (LTE-IDLE state which is merely referred to as idle as well), generation and control of a paging signal in the idle state, addition, deletion, update, and search of a tracking area of one or a plurality of user equipments 202 being served thereby, and tracking area list management.

The MME 204a distributes a paging signal to one or a plurality of base stations 203. In addition, the MME 204a performs mobility control of an idle state. When the user equipment is in the idle state and an active state, the MME 204a manages a list of tracking areas. The MME 204a begins a paging protocol by transmitting a paging message to the cell belonging to a tracking area in which the UE is registered. The idle state mobility managing unit 505-3 may manage the CSG of the eNBs 207 to be connected to the MME 204a, CSG IDs, and a whitelist.

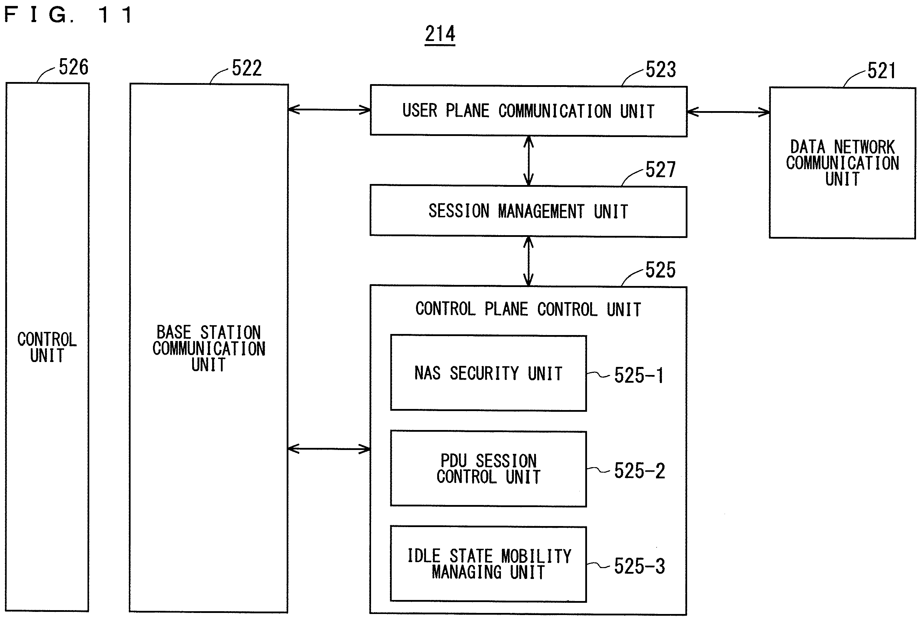

FIG. 11 is a block diagram illustrating a configuration of the 5GC. FIG. 11 illustrates a configuration of the 5GC unit 214 in FIG. 3. FIG. 11 illustrates a case where the 5GC unit 214 in FIG. 5 includes configurations of the AMF, the SMF, and the UPF. A data network communication unit 521 transmits and receives data between the 5GC unit 214 and a data network. A base station communication unit 522 transmits and receives data via the S1 interface between the 5GC unit 214 and the base station 203 and/or via the NG interface between the 5GC unit 214 and the base station 213. When the data received through the data network is user data, the data network communication unit 521 passes the user data to the base station communication unit 522 through a user plane communication unit 523 to transmit the user data to one or more base stations, specifically, the base station 203 and/or the base station 213. When the data received from the base station 203 and/or the base station 213 is user data, the base station communication unit 522 passes the user data to the data network communication unit 521 through the user plane communication unit 523 to transmit the user data to the data network.

When the data received from the data network is control data, the data network communication unit 521 passes the control data to a session management unit 527 through the user plane communication unit 523. The session management unit 527 passes the control data to a control plane control unit 525. When the data received from the base station 203 and/or the base station 213 is control data, the base station communication unit 522 passes the control data to the control plane control unit 525. The control plane control unit 525 passes the control data to the session management unit 527.

The control plane control unit 525 includes, for example, a NAS security unit 525-1, a PDU session control unit 525-2, and an idle state mobility managing unit 525-3, and performs overall processes on the control planes (may be hereinafter referred to as C-Planes). The NAS security unit 525-1, for example, provides security for a Non-Access Stratum (NAS) message. The PDU session control unit 525-2, for example, manages a PDU session between the user equipment 202 and the 5GC unit 214.

The idle state mobility managing unit 525-3, for example, manages mobility of an idle state (an RRC_IDLE state or simply referred to as idle), generates and controls paging signals in the idle state, and adds, deletes, updates, and searches for tracking areas of one or more user equipments 202 being served thereby, and manages a tracking area list.

The 5GC unit 214 distributes the paging signals to one or more base stations, specifically, the base station 203 and/or the base station 213. Furthermore, the 5GC unit 214 controls mobility of the idle state. The 5GC unit 214 manages the tracking area list when a user equipment is in an idle state, an inactive state, and an active state. The 5GC unit 214 starts a paging protocol by transmitting a paging message to a cell belonging to a tracking area in which the UE is registered.

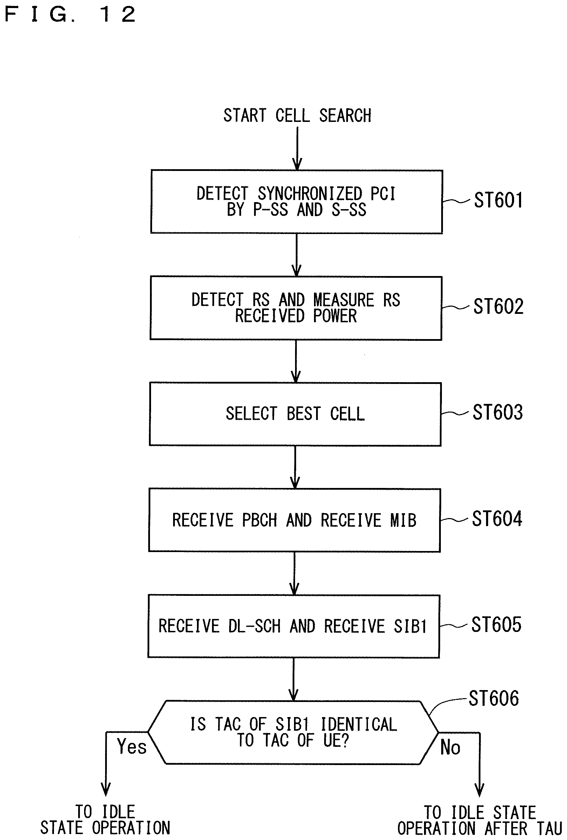

An example of a cell search method in a mobile communication system is described next. FIG. 12 is a flowchart showing an outline from a cell search to an idle state operation performed by a communication terminal (UE) in the LTE communication system. When starting a cell search, in Step ST601, the communication terminal synchronizes slot timing and frame timing by a primary synchronization signal (P-SS) and a secondary synchronization signal (S-SS) transmitted from a neighbor base station.

The P-SS and S-SS are collectively referred to as a synchronization signal (SS). Synchronization codes, which correspond one-to-one to PCIs assigned per cell, are assigned to the synchronization signals (SSs). The number of PCIs is currently studied in 504 ways. The 504 ways of PCIs are used for synchronization, and the PCIs of the synchronized cells are detected (specified).

In Step ST602, next, the user equipment detects a cell-specific reference signal (CRS) being a reference signal (RS) transmitted from the base station per cell and measures the reference signal received power (RSRP) for the synchronized cells. The codes corresponding one-to-one to the PCIs are used for the reference signal RS. Separation from another cell is enabled by correlation using the code. The code for RS of the cell is calculated from the PCI specified in Step ST601, so that the RS can be detected and the RS received power can be measured.

In Step ST603, next, the user equipment selects the cell having the best RS received quality, for example, the cell having the highest RS received power, that is, the best cell, from one or more cells that have been detected up to Step ST602.

In Step ST604, next, the user equipment receives the PBCH of the best cell and obtains the BCCH that is the broadcast information. A master information block (MIB) containing the cell configuration information is mapped to the BCCH over the PBCH. Accordingly, the MIB is obtained by obtaining the BCCH through reception of the PBCH. Examples of the MIB information include the downlink (DL) system bandwidth (also referred to as a transmission bandwidth configuration (dl-bandwidth)), the number of transmission antennas, and a system frame number (SFN).

In Step ST605, next, the user equipment receives the DL-SCH of the cell based on the cell configuration information of the MIB, to thereby obtain a system information block (SIB) 1 of the broadcast information BCCH. The SIB 1 contains the information about the access to the cell, information about cell selection, and scheduling information on another SIB (SIBk; k is an integer equal to or greater than two). In addition, the SIB1 contains a tracking area code (TAC).

In Step ST606, next, the communication terminal compares the TAC of the SIB1 received in Step ST605 with the TAC portion of a tracking area identity (TAI) in the tracking area list that has already been possessed by the communication terminal. The tracking area list is also referred to as a TAI list. TAI is the identification information for identifying tracking areas and is composed of a mobile country code (MCC), a mobile network code (MNC), and a tracking area code (TAC). MCC is a country code. MNC is a network code. TAC is the code number of a tracking area.

If the result of the comparison of Step ST606 shows that the TAC received in Step ST605 is identical to the TAC included in the tracking area list, the user equipment enters an idle state operation in the cell. If the comparison shows that the TAC received in Step ST605 is not included in the tracking area list, the communication terminal requires a core network (EPC) including MME to change a tracking area through the cell for performing tracking area update (TAU).

Although FIG. 12 exemplifies the operations from the cell search to the idle state in LTE, the best beam may be selected in NR in addition to the best cell in Step ST603. In NR, information on a beam, for example, an identifier of the beam may be obtained in Step ST604. Furthermore, scheduling information on the Remaining Minimum SI (RMSI) in NR may be obtained in Step ST604. The RMSI in NR may be obtained in Step ST605.

The device configuring a core network (hereinafter, also referred to as a "core-network-side device") updates the tracking area list based on an identification number (such as UE-ID) of a communication terminal transmitted from the communication terminal together with a TAU request signal. The core-network-side device transmits the updated tracking area list to the communication terminal. The communication terminal rewrites (updates) the TAC list of the communication terminal based on the received tracking area list. After that, the communication terminal enters the idle state operation in the cell.

Widespread use of smartphones and tablet terminal devices explosively increases traffic in cellular radio communications, causing a fear of insufficient radio resources all over the world. To increase spectral efficiency, thus, it is studied to downsize cells for further spatial separation.

In the conventional configuration of cells, the cell configured by an eNB has a relatively-wide-range coverage. Conventionally, cells are configured such that relatively-wide-range coverages of a plurality of cells configured by a plurality of macro eNBs cover a certain area.

When cells are downsized, the cell configured by an eNB has a narrow-range coverage compared with the coverage of a cell configured by a conventional eNB. Thus, in order to cover a certain area as in the conventional case, a larger number of downsized eNBs than the conventional eNBs are required.

In the description below, a "macro cell" refers to a cell having a relatively wide coverage, such as a cell configured by a conventional eNB, and a "macro eNB" refers to an eNB configuring a macro cell. A "small cell" refers to a cell having a relatively narrow coverage, such as a downsized cell, and a "small eNB" refers to an eNB configuring a small cell.

The macro eNB may be, for example, a "wide area base station" described in Non-Patent Document 7.

The small eNB may be, for example, a low power node, local area node, or hotspot. Alternatively, the small eNB may be a pico eNB configuring a pico cell, a femto eNB configuring a femto cell, HeNB, remote radio head (RRH), remote radio unit (RRU), remote radio equipment (RRE), or relay node (RN). Still alternatively, the small eNB may be a "local area base station" or "home base station" described in Non-Patent Document 7.

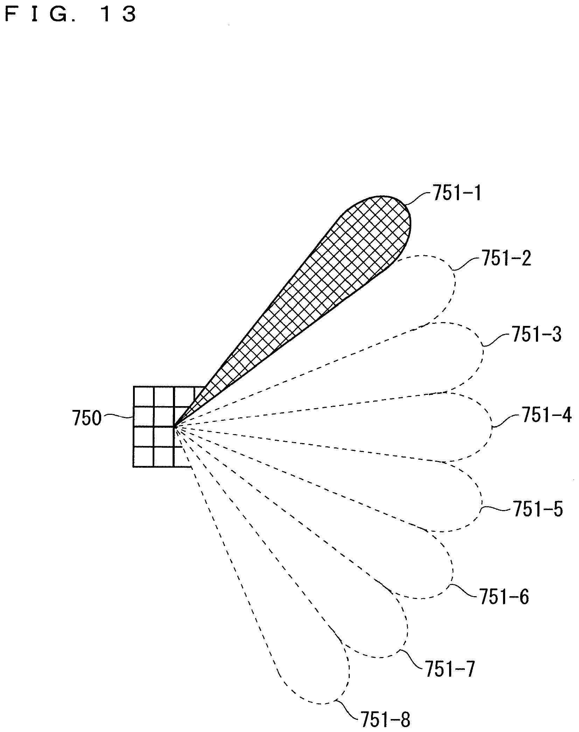

FIG. 13 illustrates an example structure of a cell in NR. In the cell in NR, a narrow beam is formed and transmitted in a changed direction. In the example of FIG. 13, a base station 750 performs transmission and reception with a user equipment via a beam 751-1 at a certain time. The base station 750 performs transmission and reception with the user equipment via a beam 751-2 at another time. Similarly, the base station 750 performs transmission and reception with the user equipment via one or more of beams 751-3 to 751-8. As such, the base station 750 configures a cell with a wide range.

Although FIG. 13 exemplifies that the number of beams to be used by the base station 750 is eight, the number of beams may be different from eight. Although FIG. 13 also exemplifies that the number of beams to be simultaneously used by the base station 750 is one, the number of such beams may be two or more.

The UE may be connected to a plurality of NWs, or may be ready to be connected to the NWs. "Connection" in the following description sometimes includes being ready for connection, besides being actually connected. The UE may be connected to the plurality of NWs through a plurality of SIMs. The UE may include only a pair of a transmitter and a receiver, or a plurality of pairs of transmitters and receivers. The plurality of NWs may be PLMNs, Non Public Networks (NPNs), or private networks. The UE may be connected in parallel with the plurality of NWs.

In the connection between the UE and each of the NWs, the RRC state of the UE may be an RRC_CONNECTED state, an RRC_INACTIVE state, or an RRC IDLE state. The CM state of the UE may be CM-IDLE or CM-CONNECTED. The UE may be in the RRC_CONNECTED state or the CM-CONNECTED state with two or more of the plurality of NWs to which the UE is connected. As another example, the UE may be in the RRC_CONNECTED state or the CM-CONNECTED state with only one NW of the plurality of NWs to which the UE is connected.

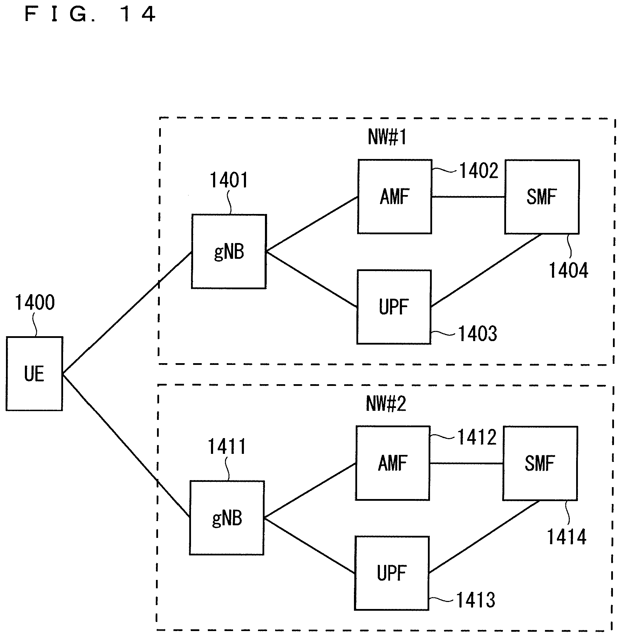

FIG. 14 is an architecture diagram illustrating an example connection between a plurality of NWs and the UE including a plurality of SIMs (may be hereinafter referred to as a multi-SIM-mounted UE (multi-SIM UE)). In FIG. 14, the multi-SIM-mounted UE is connected in parallel with a NW #1 and a NW #2.

In the example of FIG. 14, a UE 1400 is connected to a gNB 1401 in the NW #1. Furthermore, the UE 1400 is connected to a gNB 1411 in the NW #2. The gNB 1401 is connected to an AMF 1402 and a UPF 1403 in the NW #1. An SMF 1404 in the NW #1 is connected to the AMF 1402 and the UPF 1403. The gNB 1411 is connected to an AMF 1412 and a UPF 1413 in the NW #2. An SMF 1414 in the NW #2 is connected to the AMF 1412 and the UPF 1413.

Although FIG. 14 illustrates an example where the UE 1400 is connected to the two NWs, the UE 1400 may be connected to three or more NWs. Furthermore, one or more of the two NWs to which the UE 1400 is connected may be NPNs. The same may apply when the UE 1400 is connected to three or more NWs.

The UE connected in parallel with a plurality of NWs sometimes has an overlap in paging timing (may be hereinafter referred to as a paging collision). The UE with a paging collision may be a UE with only a pair of a transmitter and a receiver. Here, the UE cannot receive a paging from only one of the NWs. Thus, when colliding pagings include a paging for emergency communications such as the ETWS and the CMAS, the UE sometimes fails to receive the paging for the emergency communications. This consequently causes a problem that the UE cannot promptly receive the emergency communications.

The first embodiment discloses a method for solving the problem.

A priority is assigned to the timing with which a paging may be transmitted. This priority may be hereinafter referred to as a timing priority. A priority is assigned to a paging type. This priority may be hereinafter referred to as a type priority.

Timing priorities may be categorized into, for example, two levels or three or more levels. Parameters for the timing priorities may be provided.

Type priorities may be categorized into, for example, two levels or three or more levels. Parameters for the type priorities may be provided.

The timing priorities are associated with the type priorities. For example, when both of the timing priorities and the type priorities are categorized into two levels, a high timing priority may be associated with a high type priority, and a low timing priority may be associated with a low type priority. A paging with a predetermined type priority can be transmitted with a paging timing with a predetermined timing priority. For example, a paging lower or equal in type priority associated with the timing priority may be transmitted with a paging transmission timing. When paging timings from base stations in a plurality of NWs collide with each other, the UE may receive a paging with a higher timing priority from among the colliding pagings.

The UE may switch between transmission/reception target NWs in receiving the paging with a higher timing priority. The connection between the UE and a base station in the transmission/reception target NW may be RRC_CONNECTED, RRC_INACTIVE, or RRC_IDLE. This enables, for example, the UE to receive a paging for emergency communications more preferentially than other pagings.

As another example, a high type priority may be transmitted with a low timing priority. The operation may be applied, for example, when the UE cannot receive a paging with a predetermined timing priority due to a collision in timing with a paging with a higher timing priority from another NW. This enables, for example, the UE to promptly receive the paging with a predetermined timing priority.

The UE may expect that a paging with a type priority lower than or equal to a timing priority will be transmitted with a paging timing. In other words, the UE may expect that a paging with a type priority higher than the timing priority will not be transmitted with the paging timing. Here, the type priority lower than or equal to the timing priority may be a type priority lower than the timing priority. The paging with the type priority higher than the timing priority may be a paging with a type priority higher than or equal to the timing priority.

When timing priorities are categorized into two levels as an example of assigning the timing priorities, a high timing priority and a low timing priority may be alternately assigned to Paging Frames (PFs). A high timing priority and a low timing priority may be alternately assigned to Paging Occasions (POs). A high timing priority and a low timing priority may be alternately assigned to PDCCH monitoring occasions to be used for receiving a paging.

The paging to which a type priority is assigned may be a downlink data paging or a voice call paging. The voice call paging may be a paging for a normal incoming call, or a paging for a return voice call in response to a voice call for emergency notification. As another example, the paging to which a type priority is assigned may be a paging for SI updates or a paging for emergency communications. Examples of the emergency communications may include the Public Warning System (PWS). Examples of the emergency communications may include the Earthquake and Tsunami Warning System (ETWS), the Commercial Mobile Alert System (CMAS), the European Public Warning System (EU-ALERT), the Korean Public Alert System (KPAS), and other emergency communications.

Emergency communications for private NWs (or non-public NWs) may be provided. The aforementioned emergency communications may include the emergency communications for private NWs. This enables, for example, the UE to be notified of a trouble in premises to which the private NW is applied.

When type priorities are categorized into two levels as an example of assigning the type priorities, a high priority may be assigned to the pagings for emergency communications and SI updates, and a low priority may be assigned to other pagings. When the type priorities are categorized into three levels as another example, a high priority may be assigned to emergency communications, a medium priority may be assigned to SI updates and voice calls, and a low priority may be assigned to other pagings.

The timing priorities and the type priorities may have the same number of levels. This can, for example, avoid the complexity of association between the timing priorities and the type priorities. As another example, the timing priorities and the type priorities may have different numbers of levels. This enables, for example, increase in the flexibility in association between the timing priorities and the type priorities.

A timing priority may be assigned to each Paging Frame (PF). This enables, for example, a NW device to assign a timing priority with less amount of processing. As another example, a timing priority may be assigned to each Paging Occasion (PO). This enables, for example, increase in the flexibility in assigning timing priorities. As another example, a timing priority may be assigned to each PDCCH monitoring occasion to be used for receiving a paging. This enables, for example, further increase in the flexibility in assigning timing priorities.

As another example, a timing priority may be assigned for each DRX cycle. This enables, for example, reduction in the amount of processing for assigning timing priorities.

The assignment of timing priorities may be determined in a standard. This can, for example, avoid the design complexity in the communication system.

As another example, a core NW may determine the assignment of timing priorities. This enables, for example, increase in the flexibility in assigning timing priorities. The core NW may be, for example, the AMF or the PCF. The core NW may notify the base station of information on the determined assignment. The base station may dedicatedly notify or broadcast the information on the assignment to the UE. As another example of the notification, the core NW may directly notify the UE of the information on the assignment. For example, the AMF may notify the UE of the information via the NAS signaling.

As another example of the assignment of timing priorities, the base station may determine the assignment. This enables, for example, further increase in the flexibility in assigning timing priorities. The base station may dedicatedly notify or broadcast the information on the assignment to the UE.

A parameter for determining a timing priority may be provided. The parameter may be, for example, a parameter using a UE identifier, or a parameter similar to the PCCH configuration information (PCCH-Config) disclosed in Non-Patent Document 22 (TS38.331). A method for determining a timing priority from the parameter may be defined in a standard. This enables, for example, reduction in the size of notification of information required for determining a timing priority.

Each NW may determine a value of the parameter, and notify the UE of the value. Each NW may give the notification through the base station. As another example, the base station may determine the value of the parameter, and notify or broadcast the value to the UE. As another example, the value of the parameter may be determined for each cell.

An average value of timing priorities may be provided. The average value may be consistent, for example, among NWs or among base stations. This can, for example, prevent the UE from only using a specific NW as a paging recipient.

As another example, the average value may differ between NWs. This enables, for example, the NWs to adjust flexibility of receiving the paging of the UE. As another example, the average value may differ between base stations. This enables, for example, the base stations to adjust flexibility of receiving the paging of the UE.

The average value of the timing priorities may be determined in a standard similarly to assignment of the timing priorities, determined by the core NW, or determined by the base station.

The following (1) to (8) are disclosed as example information on assignment of the timing priorities that the core NW and/or the base station notifies or broadcasts to the UE.
(1) Information on the number of levels of timing priorities
(2) Values of timing priorities
(3) Information on the paging timings
(4) Information on a pattern of assigning timing priorities
(5) Information on a cycle of assigning timing priorities
(6) A reference paging timing
(7) Information for determining a paging timing for each timing priority
(8) Combinations of (1) to (7) above

The number of the levels in (1) may be, for example, two or three or more. For example, when no timing priority is assigned, the number of the levels in (1) may be one. The UE may obtain the number of levels of timing priorities using the information (1). This enables, for example, reduction in the amount of processing for the UE to understand the assignment of timing priorities.

For example, when the number of levels in (1) is two, the information (2) may be information indicating high and low priorities. The UE may obtain the timing priorities using the information (2). This enables, for example, reduction in the amount of processing for the UE to understand the assignment of timing priorities.

The information (3) may be, for example, information indicating which PF among PFs in a DRX cycle. Alternatively, the information (3) may be, for example, information indicating which PO among POs in a PF. Alternatively, the information (3) may be, for example, information indicating which PDCCH monitoring occasion for paging among PDCCH monitoring occasions for paging in a PO. As another example, the information (3) may be information indicating which PO among POs in a DRX cycle, or which PDCCH monitoring occasion for paging among PDCCH monitoring occasions for paging in a DRX cycle. The information (3) enables, for example, the UE to promptly understand the paging timing to which a predetermined timing priority is assigned.

As another example, the information (3) may include a parameter to be used for determining the paging timing. The parameter may include a part or the entirety of broadcast information from the base station in the NW, for example, the PCCH configuration information (PCCH-Config) disclosed in Non-Patent Document 22 (TS38.331). This enables, example, reduction in the amount of processing when the base station gives the notification to the UE.

The information (4) may be, for example, information indicating, when timing priorities are categorized into two levels, a pattern of alternately assigning a high timing priority and a low timing priority to PFs. Alternatively, the information (4) may be information indicating a repeated pattern of assigning a high timing priority twice and then assigning a low timing priority twice. The PFs may be POs or PDCCH monitoring occasions for paging. The information (4) enables, for example, the UE to promptly understand the assignment of timing priorities.

The information (5) may be, for example, information on a cycle of the pattern in (4). The information (5) may be given in a cycle different from the DRX cycle. For example, a cycle of a pattern of assigning timing priorities may span a plurality of DRX cycles. This can, for example, avoid a situation where the paging with a predetermined paging timing in a NW is lower in timing priority than a paging timing in another NW and can never be received.

The information (6) may be, for example, information on the paging timing to which a high timing priority is assigned when a high timing priority and a low timing priority are alternately assigned to PFs. The information (6) may include information on the timing priority in a reference paging timing. This can, for example, prevent a variance in the recognition of assigning timing priorities between the base station and the UE. Consequently, the stability of operations in the communication system can be increased.

The information (7) may be, for example, information indicating which PF, which PO, or which PDCCH monitoring occasion for paging in a DRX cycle is assigned for each timing priority. The DRX cycle may be a PF or a PO. The information (7) enables, for example, the UE to promptly understand the paging timing to which a predetermined timing priority is assigned.

As another example, the information (7) may include a parameter to be used for determining the paging timing for each timing priority. The parameter may include a part or the entirety of broadcast information from the base station in the NW, for example, the PCCH configuration information (PCCH-Config) disclosed in Non-Patent Document 22 (TS38.331). This can, for example, increase the flexibility in configuring the paging timing in the communication system.

The association between timing priorities and type priorities may be determined in a standard. In determining the association, for example, the Message Identifier disclosed in 9.4.1.2.2 of Non-Patent Document 21 (TS23.041 V16.2.0) may be used. This can, for example, avoid the design complexity in the communication system.

As another example, a core NW may determine the association between timing priorities and type priorities. This enables, for example, increase in the flexibility in the association between these priorities. The core NW may be, for example, the AMF or the PCF. The core NW may notify the base station of information on the determined association. The base station may dedicatedly notify or broadcast the information on the association to the UE. As another example, the core NW may directly notify the UE of the information. For example, the AMF may notify the UE of the information via the NAS signaling.

As another example, the base station may determine the association between timing priorities and type priorities. This enables, for example, further increase in the flexibility in the association between these priorities. The base station may dedicatedly notify or broadcast the information on the association to the UE.

As another example of the association between timing priorities and type priorities, the aforementioned combinations may be used. For example, a predetermined range may be defined, in a standard, for a type priority to be associated with each timing priority. The core NW may determine the association using the predetermined range in a standard. This enables, for example, the flexible association in the communication system.

The assignment of type priorities may be determined in a standard. For example, the Message Identifier disclosed in 9.4.1.2.2 of Non-Patent Document 21 (TS23.041 V16.2.0) may be used for the assignment. This can, for example, avoid the design complexity in the communication system.

As another example, the core NW may determine the assignment of type priorities. This enables, for example, increase in the flexibility in assigning type priorities. The core NW may be, for example, the AMF or the PCF. The core NW may notify the base station of information on the determined assignment. The base station may dedicatedly notify or broadcast the information on the assignment to the UE. As another example of the notification, the core NW may directly notify the UE of the information on the assignment. For example, the AMF may notify the UE of the information via the NAS signaling.

As another example of the assignment of type priorities, the base station may determine the assignment. This enables, for example, further increase in the flexibility in assigning type priorities. The base station may dedicatedly notify or broadcast the information on the assignment to the UE.

As another example of the assignment of type priorities, the aforementioned combinations may be used. For example, a predetermined range may be defined, in a standard, for a type priority to be assigned to the paging of each type. The core NW may determine the type priorities using the predetermined range in a standard. This enables, for example, the flexible assignment of type priorities of pagings in the communication system.

The UE receives a paging with a high timing priority, from among pagings in a plurality of NWs with collision timings. The UE may perform the operation when its own UE has a single receiver. When receiving the paging with a high timing priority, the UE may switch between NWs from which the paging is received. This enables, for example, the UE to receive a paging with a high timing priority from among a plurality of pagings with collision timings.

The UE need not receive pagings other than the paging with the highest timing priority, from among pagings in a plurality of NWs partly with collision timings. This can, for example, reduce the power consumption in the UE.

The UE may notify the base station of information on a paging in which no receiving operation is performed (may be hereinafter referred to as a non-reception paging). The information may include information on a paging (may be hereinafter referred to as a collision NW paging) from another NW (may be hereinafter referred to as a collision NW) that collides with the non-reception paging.

The following (1) to (15) are disclosed as examples of information on the non-reception paging.
(1) Information on a timing of the non-reception paging
(2) Information on a timing priority of the non-reception paging
(3) Information on an identifier of a collision NW
(4) Information on a timing of a collision NW paging
(5) Information on numerology in a collision NW
(6) Information on a frame timing in a collision NW
(7) Information on calculating the timing of the collision NW paging
(8) Information on a beam to be used for communicating with a collision NW
(9) Information on a synchronization signal in a collision NW
(10) Information on Radio Access Technology (RAT) in a collision NW
(11) Information on a timing priority of a paging in a collision NW
(12) Information on operations of a plurality of SIMs of its own UE
(13) Information indicating a request for changing a configuration of the non-reception paging
(14) Information on type priorities
(15) Combinations of (1) to (14) above

The information (1) may be, for example, information indicating which PF, which PO, or which PDCCH monitoring occasion for paging in a DRX cycle corresponds to the non-reception paging. The information (1) may be information using a frame number, a subframe number, a slot number, or a symbol number of the non-reception paging. This enables, for example, the UE to promptly give the notification to the base station.

The information (2) may be identical to (2) disclosed as the information on assignment of timing priorities that the core NW and/or the base station notifies or broadcasts to the UE. The information (2) enables, for example, reduction in the amount of processing when the base station reassigns timing priorities.

The information (3) may be, for example, a PLMN-ID of the other NW, or include the NPN-ID disclosed in Non-Patent Document 25 (TR23.734) or a CAG-ID. This enables, for example, the base station to understand a NW in which a paging collision should be avoided. Consequently, the complexity in the avoidance process can be avoided.

As another example of the information (3), an identifier for uniquely identifying the UE may be used. The identifier may be, for example, a 5G Globally Unique Temporary Identifier (5G-GUTI). The base station may retrieve the PLMN-ID of the other NW from the 5G-GUTI. This enables, for example, the base station to simultaneously obtain the identifier of the other NW and the UE identifier. Consequently, the base station can obtain information to be used for calculating the paging timing in the other NW with less signaling.

The information (4) may be, for example, a Paging Frame (PF), a Paging Occasion (PO), a PDCCH monitoring occasion to be used for receiving the paging, or combinations of these. This can, for example, reduce the amount of processing when the base station avoids the paging collision.

As another example, the information (4) may include information on the time of the paging timing in another NW. The information on the time may include, for example, the time at the starting point of the paging timing, the time at the end point of the paging timing, a duration of the paging timing, or some of these pieces of information. The paging timing may be a Paging Frame (PF), a Paging Occasion (PO), a PDCCH monitoring occasion to be used for receiving the paging, or combinations of these, in another NW. This can, for example, reduce the amount of processing when the base station avoids the paging collision.

The information (5) may be, for example, a subcarrier interval, a slot length, or a symbol length to be used when the UE receives the paging from another NW. The information (5) may be the parameter µ disclosed in 4.2 of Non-Patent Document 13 (TS38.211). This can, for example, enhance the reliability when the base station avoids the paging collision.

The information (6) may be, for example, a difference in frame timing between a notification target base station and a base station in another NW which is calculated per SFN, subframe, slot, symbol, or minimum unit in the communication system (e.g., Ts), or combinations of these. The slot may be a slot in the notification target base station or a slot in another NW. This can, for example, reduce the amount of processing when the base station avoids the paging collision.

As another example, the information (6) may be a predetermined time point in another NW, for example, the time in a boundary between predetermined SFNs. The boundary may be the beginning or the end of one of the SFNs. As another example, the information (6) may be the time in a boundary between predetermined subframes, the time in a boundary between predetermined slots, or the time in a boundary between predetermined symbols. The UE may obtain the information through a cell search for another NW, or from broadcast information from the other NW. This can, for example, reduce the amount of processing required for notifying the UE.

The information (7) may include, for example, the UE identifier in another NW, or a parameter to be used for determining the paging timing in the other NW. The parameter may include a part or the entirety of broadcast information from the base station in the NW, for example, the PCCH configuration information (PCCH-Config) disclosed in Non-Patent Document 22 (TS38.331). This can, for example, reduce the amount of processing required for notification from the UE.

The identifier on the information (7) may be the UE_ID disclosed in 7.1 of Non-Patent Document 26 (TS38.304), or the 5G S-Temporary Mobile Subscription Identifier (5G-S-TMSI), the 5G Temporary Mobile Subscription Identifier (5G-TMSI), or the 5G-GUTI which is disclosed in Non-Patent Document 27 (TS23.501).

The parameter on the information (7) may include the Discontinuous Reception (DRX) cycle (T) of the UE, a sum (N) of paging frames in the cycle, the number of paging occasions (Ns) in a PF, an offset (PF_offset) to be used for determining the PFs, or the first PDCCH monitoring occasion (first-PDCCH-MonitoringOccasionOfPO) in a PO all of which are disclosed in Non-Patent Document 26 (TS38.304).

The information (8) may be information on a beam via which the UE performs reception with the notification target base station. The beam may be information on a beam to be used when the UE receives an SS block from the base station. The beam may be broadcast information from the base station to the UE, for example, SIB1, or information on a beam to be used for receiving Remaining Minimum System Information (RMSI). The base station may change the paging timing in a beam to which the UE belongs, using the information (8). The base station may change the broadcast information in the beam. This enables, for example, the base station to flexibly change the paging timing.

The information (9) may be, for example, information on an SS burst cycle, or a transmission duration of an SS block in one SS burst cycle. The base station may configure the paging timing using the information (9), for example, by avoiding a plurality of SS burst cycles transmitted from the base station in the other NW or by avoiding the transmission duration of the SS block. The UE may receive the synchronization signal of the base station in the other NW, using the information. After receiving the synchronization signal, the UE may receive the paging. This can, for example, prevent a timing difference in receiving the paging by the UE.

The information (10) may be, for example, information indicating that the base station in the other NW is an NR base station or an LTE base station. The base station may change the paging timing using the information. For example, when the base station in the other NW is an LTE base station and the paging timing in the LTE base station is fixed, the base station may change the cycle of the paging timing. This can, for example, reduce the probability of failing to avoid a paging collision in the communication system.

The information (11) may be, for example, a value of a timing priority of a paging that collides with the non-reception paging, or information on a timing priority assigned to a paging from the base station in the other NW. The base station may change, using the information (11), the timing priority of the non-reception paging or the assignment of timing priorities to pagings of the base station. This can, for example, reduce the probability of failing to avoid a paging collision in the communication system.

The information (12) may be, for example, information indicating whether its own UE is a multi-SIM-mounted UE, or information on operations using a plurality of SIMs. The information on operations using a plurality of SIMs may include, for example, the number of transmitters and/or receivers in its own UE, the number of NWs to which its own UE can be connected, or the number of RRCs that its own UE can hold. The information on operations using a plurality of SIMs may be information on a combination of RRC states in its own UE, for example, information indicating whether the UE can be simultaneously in the RRC_CONNECTED state with a plurality of base stations from among base stations in a plurality of NWs. The UE may include the information in, for example, the UE capability and notify the base station of the information. The base station may transmit and receive data to and from the UE, using the information. This can, for example, increase the efficiency in the communication system.

The information (13) may be, for example, information requesting change in the paging timing in the base station, information requesting change in the assignment of timing priorities of pagings in the base station, information requesting change in the association between timing priorities and type priorities of the pagings, or combined methods of these. The base station may change, using the information, the paging timing, the assignment of timing priorities of pagings, or the assignment of timing priorities and type priorities of the pagings. This enables, for example, reduction in the amount of processing for changing the configuration in the base station.

The information (14) may be, for example, information indicating the association between timing priorities and type priorities of the pagings in a collision NW, or similar information in its own NW. The base station may change, using the information (14), the paging timing, assignment of timing priorities of pagings, or assignment of timing priorities and type priorities of the pagings. This enables, for example, reduction in the amount of processing for changing the configuration in the base station.

The UE may notify the base station of information on the non-reception paging via the RRC signaling. The UE may give the notification using, for example, the RRC setup request (RRCSetupRequest). When the RRC state on the connection with the base station is RRC_IDLE, the UE may give the notification via the signaling for the RRC setup request. This enables, for example, the UE to promptly give the notification to the base station. As another example, the UE may give the notification using, for example, the RRC setup completion (RRCSetupComplete). When the RRC state on the connection with the base station transitions from RRC_IDLE to RRC_CONNECTED, the UE may give the notification via the signaling for the RRC setup completion. This enables, for example, the UE to notify the base station of the information with a large amount of information included.

As another example, the UE may give the notification using the RRC resumption request (RRCResumeRequest). When the RRC state on the connection with the base station is RRC_INACTIVE, the UE may give the notification via the signaling for the RRC resume request. This enables, for example, the UE to promptly give the notification to the base station. As another example, the UE may give the notification using the RRC resumption completion (RRCResumeComplete). When the RRC state on the connection with the base station transitions from RRC_INACTIVE to RRC_CONNECTED, the UE may give the notification via the signaling for the RRC resumption completion. This enables, for example, the UE to notify the base station of the information with a large amount of information included.

As another example, the UE may give the notification using the RRC reconfiguration completion (RRCReconfigurationComplete). This enables, for example, the UE to notify the base station of the information with a large amount of information included.

As another example, new RRC signaling may be provided. For example, signaling for requesting RRC reconfiguration (RRCReconfigurationRequest) or signaling for notifying paging configuration information (PagingConfigurationInformationNotification) may be provided and used.

As another example of the notification, the UE may give the notification to the base station via the MAC signaling. This enables, for example, the UE to promptly notify a paging collision. As another example, the UE may give the notification via the L1/L2 signaling. This enables, for example, the UE to further promptly notify a paging collision.

The base station may change, using information on the non-reception paging obtained from the UE, the assignment of timing priorities, the paging timing, association between timing priorities and type priorities, or the assignment of type priorities to paging types.

In response to the notification from the UE, the base station may change the paging timing. The base station may change a parameter to be used for determining the paging timing. The parameter may be, for example, the PCCH configuration information (PCCH-Config) disclosed in Non-Patent Document 22 (TS38.331).

The base station may assign timing priorities, associate between timing priorities and type priorities, assign type priorities to paging types, and/or change the paging timing, uniformly for the UEs being served by the cell. The base station may broadcast, to the UEs being served by the cell, information on the change. The UEs being served by the cell may update, using the information on the change, configuration of the timing priorities of pagings, configuration of the paging timing, configuration of the association between timing priorities and type priorities, or configuration of the assignment of type priorities to paging types.

For example, the base station may broadcast the changed parameter to the UEs being served thereby. For example, the base station may include the changed parameter in the SIB1, and broadcast the changed parameter. In response to the broadcast, the UE may change the timing with which the paging is received (may be hereinafter referred to as a paging reception timing).

As another example, the base station may change the parameter for each beam. The broadcast information from the base station may differ for each beam. This can, for example, increase the flexibility in configuring the parameter in the communication system.

As another example, the base station may assign timing priorities, associate between timing priorities and type priorities, assign type priorities to paging types, and/or change the paging timing dedicatedly for each UE. The base station may dedicatedly notify each of the UEs being served by the cell of information on the change. The base station may give the notification, for example, via the RRC dedicated signaling. The UE may update, using the information on the change, configuration of the timing priorities of pagings, configuration of the paging timing, configuration of the association between timing priorities and type priorities, or configuration of the assignment of type priorities to paging types.

For example, the base station may change a parameter to be used for determining the paging timing dedicatedly for each UE. The base station may notify the changed parameter dedicatedly to each UE. The base station may include the changed parameter in the RRC signaling, for example, RRC reconfiguration (RRCReconfiguration), and dedicatedly notify each UE of the parameter. In response to the dedicated notification, the UE may change the paging reception timing. This can, for example, avoid the complexity in the process of changing the paging timing in the communication system.

As another example, the base station may collectively configure or change the parameter for a plurality of UEs. For example, the base station may collectively configure and/or change the parameter for a plurality of multi-SIM-mounted UEs. For example, the plurality of multi-SIM-mounted UEs may be all of multi-SIM-mounted UEs being served by the base station. For example, the plurality of multi-SIM-mounted UEs may have the same NW destination or different NW destinations except the base station. The plurality of multi-SIM-mounted UEs may be handled as a UE group. The base station configures and/or changes the parameter for the UE group.

The base station may collectively notify the plurality of UEs of the parameter collectively configured and/or changed for the plurality of UEs. The base station may give the notification, for example, via the RRC signaling. A specific UE-ID, for example, a multicast UE-ID may be provided for the collective notification. In response to the collective notification, the plurality of UEs may configure and/or change the parameter. This can, for example, reduce the amount of signaling between the base station and the plurality of UEs.

The base station may give the collective notification to the plurality of UEs via another RRC signaling. This can, for example, further reduce the amount of signaling between the base station and the plurality of UEs.

The UE may notify the changed parameter notified from the base station to a base station in another NW. The UE may include information on the UE identifier in the notification to the base station in the other NW. The identifier may be an identifier assigned in a NW of the base station that has changed the parameter. The base station in the other NW may change or need not change the paging timing in the other NW, using the parameter. This enables, for example, the base station to change the paging timing in the other NW while avoiding the notified parameter. This can prevent a paging collision after the paging timing is changed.

The base station may request the AMF to change a UE identifier. The base station may issue this request, for example, when only changing the parameter to be used for determining the paging timing (e.g., the PCCH configuration information (PCCH-Config)) cannot avoid a paging collision. When change in the parameter can avoid the paging collision, the base station need not issue the request to the AMF. This can, for example, prevent unnecessary change in the identifier when only changing the PCCH configuration information can avoid the paging collision. The request may include one or more UE identifiers as candidates for the changed UE identifier. The base station may issue the request, for example, via the signaling in the N2 interface. New signaling, for example, signaling for N2 UE configuration update request may be provided and used. The UE identifier may be, for example, the UE ID disclosed in 7.1 of Non-Patent Document 26 (TS38.304), or the 5G S-Temporary Mobile Subscription Identifier (5G-S-TMSI), the 5G Temporary Mobile Subscription Identifier (5G-TMSI), or the 5G-GUTI disclosed in Non-Patent Document 27 (TS23.501). In response to the signaling, the AMF may change the UE identifier.

The base station may notify the AMF of information for avoiding a paging collision. The base station may include the information in the request for the UE identifier, and notify the information. The information may include the aforementioned information (1) to (15). The base station may convert the information (1) to (15) notified from the UE into the signaling in the N2 interface, and notify the information. The information may further include information on its own NW. The information on its own NW may be the information (1) to (15) in which the other NW is replaced with its own NW. In response to the information on its own NW, the AMF may change the UE identifier. This can, for example, prevent the paging collision by the changed UE identifier.

The AMF may notify the UE of the changed UE identifier. The AMF may give the notification via the NAS signaling, for example, using the CONFIGURATION UPDATE COMMAND disclosed in Non-Patent Document 32 (TS24.501). The identifier may be, for example, the 5G S-Temporary Mobile Subscription Identifier (5G-S-TMSI) disclosed in Non-Patent Document 27 (TS23.501). In response to the notification, the UE may update the UE-ID of its own UE.

The UE may notify the AMF of the completion of the update of the identifier of its own UE. The UE may give the notification via the NAS signaling, for example, using the CONFIGURATION UPDATE COMPLETE disclosed in Non-Patent Document 32 (TS24.501).

The AMF may notify the base station of the changed identifier. The AMF may give the notification via the signaling in the N2 interface. In response to the notification, the base station may change the paging timing of the UE. For example, the base station may change a parameter to be used for determining the paging timing, using the changed UE identifier. This can, for example, increase the flexibility in changing the paging timing in the UE. The base station may notify the UE of the changed parameter in the same manner as previously described.

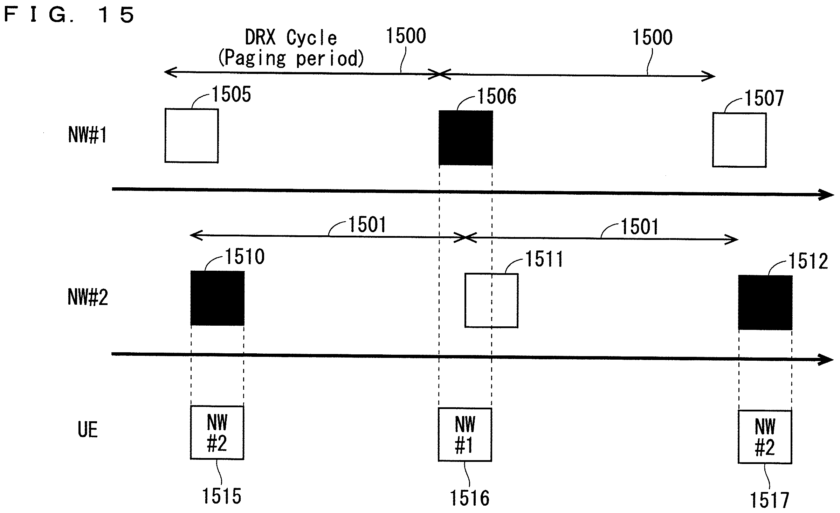

FIG. 15 illustrates the first example of assignment of timing priorities of pagings from a plurality of NWs and pagings to be received by the UE. In the example of FIG. 15, the timing priorities are assigned at two high and low levels. In the example of FIG. 15, an arrow mark 1500 indicates a DRX cycle in a NW #1 of the UE, and an arrow mark 1501 indicates a DRX cycle in a NW #2 of the UE. In the example of FIG. 15, paging timings of the NW #1 are indicated by regions 1505 to 1507, and paging timings of the NW #2 are indicated by regions 1510 to 1512. In the example of FIG. 15, the regions 1505, 1507, and 1511 illustrated by white squares correspond to the paging timings to which low timing priorities are assigned, and the regions 1506, 1510, and 1512 illustrated by black squares correspond to the paging timings to which high timing priorities are assigned.

In the example of FIG. 15, the paging timings indicated by the regions 1505 and 1510 overlap one another. Here, the UE receives, in a region 1515, the paging from the NW #2 to which the high timing priority is assigned. Similarly, the UE receives the paging from the NW #1 in a region 1516, and receives the paging from the NW #2 in a region 1517.

As another example of the assignment of timing priorities, the paging timing may be configured for each of the timing priorities. For example, a parameter of the PCCH configuration information (PCCH-Config) disclosed in Non-Patent Document 22 may be determined for each of the timing priorities. The UE may have a plurality of paging timings in one paging cycle. When a paging timing with a timing priority overlaps with a paging timing of another timing priority in one UE, the paging with a higher timing priority may be prioritized.

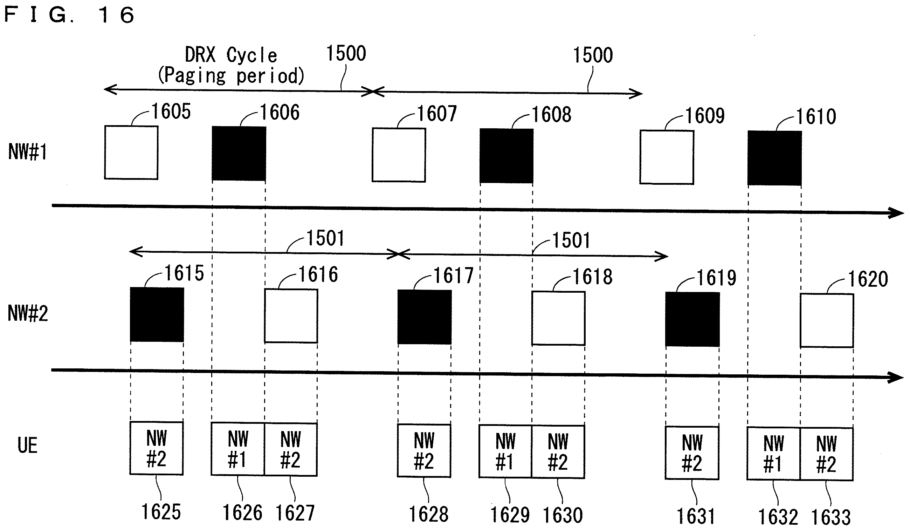

FIG. 16 illustrates the second example of assignment of timing priorities of pagings from a plurality of NWs and pagings to be received by the UE. In the example of FIG. 16, the timing priorities are assigned at two high and low levels. In FIG. 16, paging timings with high timing priorities and paging timings with low timing priorities are assigned to the UE from both of the NW #1 and the NW #2. In FIG. 16, the same element numbers are applied to the elements common to those in FIG. 15, and the common description thereof is omitted.

In the example of FIG. 16, the paging timings with high timing priorities assigned from the NW #1 are configured as regions 1606, 1608, and 1610, and the paging timings with low timing priorities assigned from the NW #1 are configured as regions 1605, 1607, and 1609. In the example of FIG. 16, the paging timings with high timing priorities assigned from the NW #2 are configured as regions 1615, 1617, and 1619, and the paging timings with low timing priorities assigned from the NW #2 are configured as regions 1616, 1618, and 1620.

In the example of FIG. 16, the paging timings indicated by the regions 1605 and 1615 overlap one another. Here, the UE receives, in a region 1625, the paging from the NW #2 to which the high timing priority is assigned. Since the paging timings indicated by the regions 1606 and 1616 do not overlap with other paging timings, the UE receives the paging from the NW #1 in a region 1626, and receives the paging from the NW #2 in a region 1627. Similarly, the UE receives, in a region 1628, the paging from the NW #2 to which the high timing priority is assigned, receives the paging from the NW #1 in a region 1629, and receives the paging from the NW #2 in a region 1630. Similarly, the UE receives, in a region 1631, the paging from the NW #2 to which the high timing priority is assigned, receives the paging from the NW #1 in a region 1632, and receives the paging from the NW #2 in a region 1633.

The UE may associate a timing priority assigned in a NW with a timing priority assigned in another NW. The UE may establish the association, for example, when the number of levels of the timing priorities in the NW is different from that of the timing priorities in the other NW. For example, even when the number of levels of the timing priorities differs among a plurality of NWs, the UE can compare the timing priorities among the plurality of NWs.

A method for establishing the association may be determined in a standard. For example, the timing priorities with a smaller number of levels may be associated with the timing priorities with a greater number of levels. For example, when two levels and three levels are used as the number of levels, high and low in the timing priorities with two levels may be associated with high and low in the timing priorities with three levels. This can, for example, avoid the complexity in establishing the association.

As another example, the timing priorities with a greater number of levels may be associated with the timing priorities with a smaller number of levels. For example, when two levels and three levels are used as the number of levels, high, middle, and low in the timing priorities with three levels may be associated with high, high, and low in the timing priorities with two levels. This can, for example, increase the flexibility in establishing the association.

Another solution is disclosed. A paging type that can be transmitted is assigned to each timing priority. For example, when the timing priorities are categorized into two levels, the pagings of all types in the pagings with a high timing priority may be transmitted, and the pagings of all types except for emergency communications in the pagings with a low timing priority may be transmitted. As another example, when the timing priorities are categorized into three high, middle, and low levels, the pagings of all types in the pagings with a high timing priority may be transmitted, the pagings of all types except for emergency communications in the pagings with a middle timing priority may be transmitted, and the pagings of all types except for emergency communications, voice calls, and SI updates in the pagings with a low timing priority may be transmitted. The method disclosed in the first embodiment may be used for assigning the timing priorities. The operations of the UE may be the same as those disclosed in the first embodiment. This, for example, saves assignment of type priorities. Consequently, the amount of processing in the NW device in the communication system can be reduced.

As another example, the pagings of all types may be transmitted, irrespective of the timing priorities. For example, when the UE cannot receive a paging with a predetermined timing priority due to a collision in timing with a paging with a higher timing priority from another NW, the aforementioned method enables the UE to promptly receive the paging with the predetermined timing priority.

Another solution is disclosed. A timing priority that can be transmitted may be assigned to each paging type. For example, when the timing priorities are categorized into two levels, emergency communications may be transmitted only in a paging with a high timing priority, and pagings of other types may be transmitted in pagings with both of high and low timing priorities. As another example, when the timing priorities are categorized into three high, middle, and low levels, emergency communications may be transmitted only in a paging with a high timing priority, voice calls and SI updates may be transmitted in a paging with a high or middle timing priority, and pagings of other types may be transmitted in pagings with any of high, middle, and low timing priorities. The method disclosed in the first embodiment may be used for assigning the timing priorities. The operations of the UE may be the same as those disclosed in the first embodiment. This, for example, saves assignment of type priorities. Consequently, the amount of processing in the NW device in the communication system can be reduced.

As another example, the pagings of all types may be transmitted with all the timing priorities. For example, when the UE cannot receive a paging with a predetermined timing priority due to a collision in timing with a paging with a higher timing priority from another NW, the aforementioned method enables the UE to promptly receive a paging of a predetermined type.

The method disclosed in the first embodiment may be used when connections with a plurality of NWs are active, for example, when RRC states with base stations in the plurality of NWs are RRC_CONNECTED. The method disclosed in the first embodiment may be used when only a connection with one NW is active and connections with other NWs are not active, for example, when the RRC state with a base station in one NW is RRC_CONNECTED and RRC states with base stations in the other NWs are RRC INACTIVE or RRC IDLE. The method disclosed in the first embodiment may be used when connections with a plurality of NWs are not active, for example, when the RRC states with base stations in the plurality of NWs are RRC_INACTIVE or RRC_IDLE. The UE may switch between NWs to which the UE is connected, in receiving the paging. Consequently, the UE may notify the base station in the source NW of information on switching the connection. The base station in the source NW may terminate the scheduling for the UE, using the information. This enables, for example, efficient use of radio resources in the base station in the source NW.

The first embodiment can reduce the probability that the UE fails to receive a paging of emergency communications due to a collision in timing between the paging of the emergency communications and a paging of another NW.

### The First Modification of the First Embodiment

The first embodiment discloses a method for the UE to preferentially receive a paging with a high timing priority. The first modification discloses a method for receiving operations of the UE when paging timings with the same timing priority collide with each other.

The UE may receive a paging from a base station with a superior communication quality. This can, for example, enhance the reliability in receiving the paging.

The UE may determine the communication quality using a synchronization signal to be transmitted from the base station, the CSI-RS, the PDCCH, or the DM-RS. The DM-RS may be a DM-RS of the PDCCH, a DM-RS of the PDSCH, or a DM-RS of the PBCH.

As another example, the UE may preferentially receive a paging from the base station with less paging timings. The UE may determine the base station with less paging timings, using the DRX cycle, the number of PFs in the DRX cycle, the number of POs in the PF, or the number of PDCCH monitoring occasions in the PO. Some of these may be combined and used. As another example, the UE may preferentially receive a paging from the base station with a longer duration to the next paging timing. This can, for example, reduce the latency in receiving the paging.

As another example, the UE may receive the paging from a NW different from that of the paging previously received. For example, when pagings with the same timing priority collide with each other, the UE may switch in order between NWs from which the UE receives the pagings. Specifically, the NW from which the UE receives the paging may be determined using a round robin. This method may be used, for example, when pagings from a plurality of NWs on the same cycle collide with each other. This can prevent, for example, the UE from failing to receive a paging from a specific NW for a long time.

As another example, the UE may switch between NWs from which the UE receives the pagings, using the presence of the paging in the paging timing with which a reception operation has been performed. The switching may be, for example, switching in order between a plurality of NWs. The switching may be performed using, for example, the aforementioned round robin. For example, even when the timings with which pagings are actually transmitted overlap with the paging timings from a plurality of NWs, the UE can receive pagings from the plurality of NWs.

As another example, the UE may have a parameter for receiving the pagings from the plurality of NWs. The parameter may be provided for each NW to which the UE is connected, for each paging timing from the same NW, or using a combination of these. The parameter may be, for example, a parameter to which a value is added as time passes. When the UE performs an operation of receiving a paging from a NW, the parameter may be a parameter from which a predetermined value is subtracted, or may be initialized.

When the UE has actually received a paging from a NW, the parameter may be a parameter from which a predetermined value is subtracted, or may be initialized. The predetermined value to be subtracted may be a fixed value, different for each timing priority, different for each type of the paging actually received, or different between when the UE performs the receiving operation and when the UE has actually received the paging. The UE may perform an operation of receiving a paging from the NW with the highest parameter. When a plurality of NWs have the same parameter value, from which NW the UE performs an operation of receiving a paging may be predetermined. This can, for example, increase the flexibility for the UE in receiving the pagings from a plurality of NWs.

As another example, the UE may have a timer for receiving the pagings from the plurality of NWs. The timer may be provided for each NW to which the UE is connected, for each paging timing from the same NW, or using a combination of these. The timer may be started, for example, when the UE is registered in a NW (e.g., RM_REGISTERED). When the UE performs an operation of receiving a paging from a NW, the timer may be stopped or reset. When the UE has actually received a paging from a NW, the parameter may end or be initialized. The UE may perform an operation of receiving a paging from a NW with the least remaining time of the timer, or from a NW in which the timer has expired earlier. The initial value of the timer may be fixed among a plurality of NWs, or different for each of the NWs. The initial value of the timer may be determined in a standard. Alternatively, a device in each NW (e.g., the AMF, the PCF, the UPF, the SMF, or the base station) may determine the initial value of the timer and notify the value to the UE. This, for example, produces the same advantages as previously described.

The UE may notify the base station of information on the parameter or the timer. The base station may determine, using the information, whether to transmit the paging with a predetermined paging timing, or a type of the paging with a predetermined paging timing. The base station need not transmit the paging with the paging timing, using, for example, the fact that the parameter value for its own NW is the second highest or less among the NWs. This can, for example, reduce the power consumption in the communication system.

As another example, the UE may receive a paging with a preceding paging timing. The UE may perform the operation, for example, when a part of paging timings from a plurality of NWs overlaps. This enables, for example, the UE to promptly receive the paging.

As another example, the UE may make the determination, using a type of a NW. Examples of the type of the NW may include PLMN and private NW (or non-public NW). The UE may, for example, preferentially receive a paging from a base station closer to a PLMN. This enables, for example, the UE to promptly receive emergency notification from the PLMN. As another example, the UE may preferentially receive the paging from a base station closer to a private NW. This enables, for example, the UE to promptly receive the downlink data generated in the private NW.

A primary NW and a secondary NW may be provided. A multi-SIM-mounted UE may configure the primary NW or the secondary NW. The UE may configure the primary NW and/or the secondary NW, in the base station and/or the AMF in the primary NW or in the secondary NW. This can avoid the complexity in the process of notifying information on a paging collision, in designing the communication system.

A person may configure the primary NW and/or the secondary NW for the UE. The primary NW and the secondary NW are configured, for example, according to the preference of the person. This enables avoidance of a paging collision in the NW preferred by the person. The configuration of the primary NW and/or the secondary NW may be prestored in the UE. The UE can use the configuration of the primary NW and/or the secondary NW at any time.

The UE may receive a paging from the base station in the primary NW. This can, for example, reduce the amount of processing in the UE.

From which NW the UE should preferentially receive the paging may be determined for each timing priority disclosed in the first embodiment. For example, when the timing priorities are categorized into two levels, the UE may preferentially receive a paging with a high timing priority from a base station closer to a PLMN, and receive a paging with a low timing priority from a base station closer to a private NW. This enables, for example, the UE to promptly receive emergency notification from the PLMN and the downlink data generated in the private NW.

The UE may determine a NW from which a paging is preferentially received, in a method different from the aforementioned method. This enables, for example, the UE to flexibly perform the operation of receiving the paging.

The UE may notify the base station of from which base station in which NW the UE preferentially receives the paging. As another example, the UE may notify the base station that the UE does not receive the paging from the base station. The notification target base station may be a base station from which the UE does not receive the paging. In response to the notification, the base station may change the assignment of timing priorities, or change the paging timing.

The base station may notify the UE of the changed assignment of timing priorities, or the changed paging timing. The base station may give the notification to the UE, for example, in the method disclosed in the first embodiment. This can, for example, prevent the UE from receiving a paging only from a base station in a specific NW. As another example, the notification target base station may be a base station from which the UE receives the paging. The UE may notify the base station from which the UE receives the paging that the UE receives the paging. In response to the notification, the base station may determine the assignment of a paging with each paging timing. This can, for example, increase the efficiency of notifying the paging in the communication system.

After obtaining information on the paging timing from the base station in each NW to which the UE is connected, the UE may give the notification to the base station. Alternatively, after obtaining information on the timing priority with the paging timing from the base station in each NW to which the UE is connected, the UE may give the notification. Alternatively, the UE may give the notification after obtaining both pieces of the information.

As another example, the UE may give the notification to the base station when from which base station in which NW the UE preferentially receives the paging is switched, for example, when the communication quality with a base station from which the UE does not receive the paging exceeds the communication quality with a base station from which the UE receives the paging. The communication quality may be, for example, the synchronization signal from the base station and/or the RSRP of the CSI-RS, the RSRQ, the SINR, or the received power. Here, the UE may include the notification to the base station in the measurement report. This enables, for example, the base station in which the communication quality has deteriorated to apply the paging timing to the communication with another UE. This can increase the communication efficiency.

Information from the UE to the base station which is included in from which base station in which NW the UE preferentially receives the paging may be the same as, for example, the information (1) to (15) disclosed as the example information on the non-reception paging. The information may include information on a collision between identical timing priorities.

The notification from the UE to the base station may include a request for changing the paging timing. In response to the request, the base station may change the paging timing. Change in the paging timing in the base station, notification or broadcast of the change in the paging timing from the base station to the UE, and/or operations in the UE may be identical to, for example, the methods disclosed in the first embodiment.

As another example, the base station may determine from which base station in which NW the UE preferentially receives the paging. The base station may make the determination using, for example, a measurement report from the UE or a type of the NW (e.g., PLMN or private NW), or prioritize a base station closer to a primary NW.

The base station that makes the determination may be, for example, a base station closer to a primary NW. This can, for example, avoid the complexity in the control in the communication system. As another example, the base station that makes the determination may be a base station with superior communication quality with the UE. This can, for example, increase the quality of control from the base station to the UE. As another example, the base station that makes the determination may be a base station whose state of the RRC connection with the UE is RRC_CONNECTED. This can, for example, avoid the complexity in the control in the communication system.

The base station may notify the UE of from which base station in which NW the UE preferentially receives the paging. In response to the notification, the UE may perform a process of receiving pagings with overlapping timings.

The base station may give the notification to the UE via the RRC signaling, for example, the signaling for the RRC connection reconfiguration. This enables, for example, the base station to notify the UE of a large amount of information. As another example, the base station may give the notification to the UE via the MAC signaling. This enables, for example, the base station to promptly notify the UE of the information. As another example, the base station may give the notification to the UE via the L1/L2 signaling. This enables, for example, the base station to further promptly notify the UE of the information.

As another example, the core NW may determine from which base station in which NW the UE preferentially receives the paging. The core NW may be, for example, the AMF, the SMF, or the PCF. The core NW device may make the determination using, for example, a type of the NW (e.g., PLMN or private NW), or prioritize a base station closer to a primary NW.

The core NW device that makes the determination may be, for example, a device closer to a primary NW. This can, for example, avoid the complexity in the control in the communication system. As another example, the core NW device that makes the determination may be a core NW device in a NW in a base station with superior communication quality with the UE. This can, for example, increase the quality of control from the base station to the UE. As another example, the core NW device that makes the determination may be a core NW device in a NW in a base station whose state of the RRC connection with the UE is RRC_CONNECTED. This can, for example, avoid the complexity in the control in the communication system. As another example, the core NW device that makes the determination may be a core NW device in a NW whose connection state with the UE is CM_CONNECTED. This can, for example, avoid the complexity in the control in the communication system.

The core NW device may notify the UE of from which base station in which NW the UE preferentially receives the paging. In response to the notification, the UE may perform a process of receiving pagings with overlapping timings.

The core NW device may give the notification to the UE via the NAS signaling. This enables, for example, the core NW device to notify the UE of a large amount of information. As another example, the core NW device may give the notification to the UE through the base station. The base station may give the notification to the UE via the RRC signaling, for example, the signaling for the RRC connection reconfiguration.

This enables, for example, the base station to notify the UE of a large amount of information. As another example, the base station may give the notification to the UE via the MAC signaling. This enables, for example, the base station to promptly notify the UE of the information. As another example, the base station may give the notification to the UE via the L1/L2 signaling. This enables, for example, the base station to further promptly notify the UE of the information.

The method disclosed in the first modification may be applied when no timing priority is configured. This enables, for example, the UE to promptly understand from which NW the paging is received even when no timing priority of the paging is provided.

The first modification enables the base station and/or the core NW device to understand from which NW the UE preferentially receives the paging. Consequently, a malfunction in the communication system can be prevented.

### The Second Modification of the First Embodiment

A multi-SIM-mounted UE transmits and receives data with a plurality of NWs. For example, when the UE is connected to PLMNs, the UE sometimes receives emergency communications with the same details from a plurality of the PLMNs. This causes a problem of diminishing the memory size of the UE.

The second modification discloses a method for solving the problem.

The UE deletes pagings of the same type. The UE may retain only the paging first received. The UE may delete the paging received later. The UE may, for example, delete data corresponding to the paging received later, or need not receive the data.

The operations in the UE may be applied only to pagings of a predetermined type. The operations in the UE may be applied to, for example, emergency communications. Examples of the emergency communications may include the Public Warning System (PWS), the Earthquake and Tsunami Warning System (ETWS), the Commercial Mobile Alert System (CMAS), the European Public Warning System (EU-ALERT), and the Korean Public Alert System (KPAS). The emergency communications may be, for example, the emergency communications for private NWs disclosed in the first embodiment. The emergency communications may be other emergency communications. This can, for example, prevent the UE from erroneously deleting one of pieces of data with different details as the same data.

The UE may determine the presence or absence of an overlap using information on a paging type. The information may be, for example, information included in the paging, or information included in data corresponding to the paging. The information may be, for example, the Message Identifier disclosed in 9.4.1.2.2 of Non-Patent Document 21 (TS23.041 V16.2.0).

The paging may include information on a source. For example, the paging of emergency communications may include information on a source of the emergency communications. The information on a source may be uniquely assigned irrespective of the PLMN, or assigned by each of the PLMNs When each of the PLMNs assigns the information on a source, the PLMN may notify the UE of information on the assignment to the source. For example, the AMF may give the notification to the UE. The UE may determine the presence or absence of an overlap using the information on the source. This can, for example, prevent the UE from erroneously detecting pieces of data from different sources as duplicates.

A paging may include information on a serial number. The serial number may be, for example, unique in the source. The UE may determine the presence or absence of an overlap using the information on a serial number. This can, for example, prevent the UE from erroneously detecting different pieces of data from the same source as duplicates.

The UE may determine pagings of a predetermined type which have been received within a predetermined time difference as pagings corresponding to the same data. For example, when the UE receives pagings of emergency communications from base stations in a plurality of NWs within a predetermined time difference, the UE may determine that the emergency communications have the same details. For example, upon receipt of emergency communications with the same details from a plurality of NWs with different timings, the UE can determine that the emergency communications have the same details.

The predetermined time difference may be predefined, determined and notified to the UE by the core NW, or determined and notified to the UE by the base station.

The base station that makes the determination may be, for example, a base station closer to a primary NW, similarly to the first modification of the first embodiment. This can, for example, avoid the complexity in the control in the communication system. As another example, the base station that makes the determination may be a base station with superior communication quality with the UE. This can, for example, increase the quality of control from the base station to the UE. As another example, the base station that makes the determination may be a base station whose state of the RRC connection with the UE is RRC_CONNECTED. This can, for example, avoid the complexity in the control in the communication system.

The core NW may be, for example, the AMF, the SMF, or the PCF, similarly to the first modification of the first embodiment. The core NW device may make the determination using, for example, a type of the NW (e.g., PLMN or private NW), or prioritize a base station closer to a primary NW.

The core NW device that makes the determination may be, for example, a device closer to a primary NW, similarly to the first modification of the first embodiment. This can, for example, avoid the complexity in the control in the communication system. As another example, the core NW device that makes the determination may be a core NW device in a NW in a base station with superior communication quality with the UE. This can, for example, increase the quality of control from the base station to the UE. As another example, the core NW device that makes the determination may be a core NW device in a NW in a base station whose state of the RRC connection with the UE is RRC CONNECTED. This can, for example, avoid the complexity in the control in the communication system. As another example, the core NW device that makes the determination may be a core NW device in a NW whose connection state with the UE is CM_CONNECTED. This can, for example, avoid the complexity in the control in the communication system.

A plurality of NWs, for example, a plurality of core NW devices may determine the predetermined time difference. Alternatively, a plurality of base stations may determine the predetermined time difference. The predetermined time difference may differ among a plurality of NWs or among a plurality of base stations. The UE may use a shorter time from among different times in a plurality of NWs and/or a plurality of base stations. This can, for example, prevent the UE from erroneously deleting one of different pieces of data as the same data. As another example, the UE may use a longer time from among different times in a plurality of NWs and/or a plurality of base stations. This can, for example, prevent the UE from erroneously detecting the same pieces of data as different pieces of data. Consequently, the amount of processing in the UE can be reduced.

The predetermined time difference may be provided for each paging type. This can, for example, increase the flexibility in the communication system.

The operations in the UE may be applied when UEs use the same PLMN. In other words, the operations in the UE need not be applied when the UEs are connected to different PLMNs. For example, when different paging types are assigned to the same Message Identifiers (see Non-Patent Document 21 (TS23.041 V16.2.0)) in each NW, it is possible to prevent the UE from erroneously detecting the different paging types as the same paging type.

The operations in the UE may be applied to a private NW. This enables, for example, the UE to detect emergency communications for private NWs with the same details as duplicates. Consequently, the amount of processing in the UE can be reduced.

As another example, the operations in the UE may be applied to the same private NW. For example, when different paging types are assigned to the same Message Identifiers (see Non-Patent Document 21 (TS23.041 V16.2.0)) in each NW, it is possible to prevent the UE from erroneously detecting the different paging types as the same paging type.

Information on the assignment of the Message Identifiers (see Non-Patent Document 21 (TS23.041 V16.2.0)) to the paging types in each NW may be notified to the UE. The information may be notified, for example, via the NAS signaling. In response to the notification, the UE may detect the pagings with the same details. This enables, for example, the UE to detect the pagings of the same type even when different message identifiers are assigned to the same paging type in different NWs.

The second modification enables avoidance of receiving overlapping pagings. Consequently, the amount of processing in the UE can be reduced.

### The Second Embodiment

A multi-SIM-mounted UE may maintain the RRC connection with base stations in a plurality of NWs. The UE may perform transmission and reception with each of the base stations in a plurality of NWs on a time shared basis.

Here, the following problem occurs in the operations. For example, while the UE switches the transmission/reception target from a base station in a source NW (may be hereinafter referred to as a base station #1) to a base station in another NW (may be hereinafter referred to as a base station #2) and performs transmission and reception with the base station #2, the UE maintains RRC_CONNECTED as the RRC state with the base station #1. However, the UE cannot receive a signal from the base station #1. Here, when the UE detects loss of synchronization with the base station #1 and consequently detects an RLF with the base station #1, the UE needs to be reconnected to the base station #1.

The second embodiment discloses a method for solving the problem.

The UE stops timers and/or counters (may be hereinafter referred to as RLF timers) to be used for detecting the RLF with the base station #1. The UE may stop the RLF timers when the UE switches the transmission/reception target from the base station #1 to the base station #2. Examples of the RLF timers may include the T310, N310, and N311 disclosed in Non-Patent Document 22 (TS38.331), and combinations of these.

The UE may notify the base station #1 of switching the transmission/reception target or stopping the RLF timers for the base station #1. In response to the notification, the base station #1 need not perform scheduling for the UE. This can, for example, increase the communication efficiency in the base station #1.

The base station may have a timer. The timer may be, for example, a timer that manages activity of the UE (may be hereinafter referred to as an inactivity timer). The timer may be, for example, a timer that advances during no transmission or reception between the base station and the UE. The timer may be a timer that stops or is reset when the base station performs transmission or reception with the UE. When the timer expires, the base station may instruct the UE to release or abort the RRC connection.

In response to the notification from the UE, the base station #1 may stop the inactivity timer. This can, for example, prevent advancement of the timer when a connection target of the UE is switched from the base station #1 to the base station #2. This can prevent the base station from determining to abort the RRC connection of the UE during the switching.

The UE may stop the RLF timers before, after, or simultaneously with the notification to the base station #1. For example, stopping the RLF timers before the notification enables reduction in the memory usage in the UE when the UE switches the transmission/reception target. For example, stopping the RLF timers after the notification enables reduction in the amount of processing when the UE gives the notification to the base station #1. For example, stopping the RLF timers simultaneously with the notification enables avoidance of the complexity in managing the timers in the UE.

The UE may dynamically give the notification to the base station #1. The UE may give the notification, for example, via the L1/L2 signaling. This enables, for example, prompt switching of the transmission/reception target when the UE generates uplink data for the base station #2. As another example, the UE may give the notification via the MAC signaling. This enables, for example, notification of a large amount of information through uplink transmission of higher modulation orders, and enhancement of the reliability through the retransmission control.

As another example, the UE may semi-statically give the notification to the base station #1. The UE may give the notification, for example, via the RRC signaling. The RRC signaling to be used for the notification may be newly provided. This saves, for example, the UE from giving the notification each time the UE switches the transmission/reception target. Consequently, the amount of signaling between the UE and the base station can be reduced.

As another example, the base station may predetermine switching of the transmission/reception target in the UE, and notify the UE of the switching. In response to the notification, the UE may determine a base station as a transmission/reception target. The base station that gives the notification to the UE may be, for example, predefined. For example, the SIM in the UE may include the information. This enables, for example, reduction in the amount of signaling between the UE and the base station.

The UE may establish the downlink synchronization with the base station #2. The UE may establish the downlink synchronization using a synchronization signal (e.g., the SS block) from the base station #2, or using another signal, for example, the CSI-RS from the base station #2. The UE may establish the downlink synchronization with the base station #2, for example, after stopping the RLF timers for the base station #1. This can, for example, prevent expiration of the RLF timers for the base station #1 while the UE receives the downlink signal from the base station #2. As another example, the UE may establish the downlink synchronization with the base station #2 after notifying the base station #1 of switching the transmission/reception target. This saves, for example, the base station #1 from performing scheduling for the UE while the UE performs operations of establishing the downlink synchronization. Consequently, the communication efficiency in the base station #1 can be increased.

As another example, the UE may hold information on the frame timings in both of the base stations #1 and #2. For example, the UE may hold information on a frame offset between the base stations #1 and #2. The UE may obtain such information when establishing the RRC connection with each of the base stations #1 and #2. The UE may update the information. The UE may update the information in a predetermined cycle or upon occurrence of a certain event. The UE need not establish the downlink synchronization with the base station #2 while holding the pieces of information. This enables, for example, the UE to promptly switch transmission and reception between the base stations #1 and #2.

The UE starts or resumes the timers and/or counters (may be hereinafter referred to as RLF timers) to be used for detecting an RLF with the base station #2. The UE may start or resume the RLF timers after switching the transmission/reception target from the base station #1 to the base station #2, for example, after completing the random access procedure between the UE and the base station #2.

The random access may be, for example, random access with two steps of transmission of the PRACH from the UE to the base station and an RA response from the base station to the UE, or random access with four steps. The UE may start or resume the RLF timers upon receipt of the RA response from the base station or upon receipt of a response in the fourth step from the base station. After completion of the random access, the base station may start a timer for the UE, for example, an inactivity timer, or resume the timer without resetting it. This can, for example, avoid the complexity in the control of the RLF timers in the UE and/or the inactivity timer in the base station.

The UE need not perform the random access procedure with the base station #2. For example, when the UE can maintain the uplink synchronization with the base station #2, the UE need not perform the random access procedure. Examples of a case where the UE can maintain the uplink synchronization with the base station #2 may include a case where a predetermined period has not elapsed since transmission and reception between the UE and the base station #2 are stopped, a case where the position of the UE is within a predetermined range, and a case where the speed of the UE falls within a predetermined range. This enables, for example, prompt resumption of transmission and reception between the UE and the base station #2.

The UE may notify the base station #2 of switching the transmission/reception target to the base station #2, or resumption of the RLF timers for the base station #2. The UE may give the notification to the base station #2, for example, when the UE does not perform the random access procedure with the base station #2. The UE may give the notification via the L1/L2 signaling. This enables, for example, the UE to promptly notify the base station #2 of switching of the transmission/reception target. As another example, the UE may give the notification via the MAC signaling. This enables, for example, enhancement of the reliability through the retransmission control. As another example, the UE may give the notification via the RRC signaling. This enables, for example, the UE to notify the base station of a large amount of information. In response to the notification, the base station may start an inactivity timer for the UE, or resume the timer without resetting it. This can, for example, avoid the complexity in the control of the inactivity timer in the base station.

In resuming the RLF timers, the RLF timers may be reset. This can, for example, avoid the complexity in designing the UE. As another example, the RLF timers need not be reset. In other words, each of the RLF timers may be resumed from a value when the RLF timer is stopped. For example, when the UE is actually out of synchronization with the base station #2, the UE can promptly detect an RLF, and consequently promptly recover from the RLF.

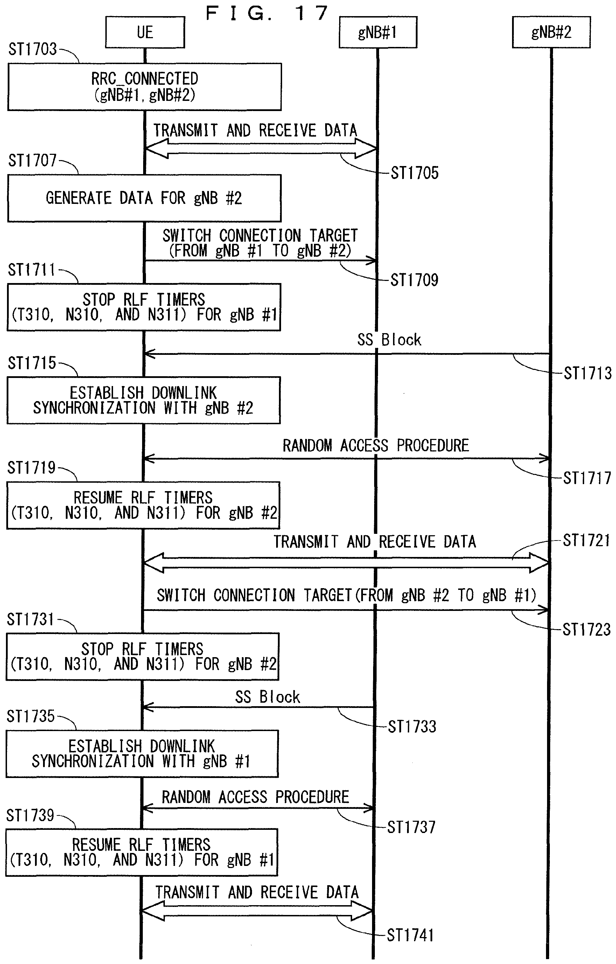

FIG. 17 is a sequence diagram illustrating example operations of stopping and resuming the RLF timers when the UE switches a transmission/reception target. In FIG. 17, the UE is connected to the base station #1 being served by the NW #1 and to the base station #2 being served by the NW #2.

In Step ST1703 of FIG. 17, the connection of the UE with each of the gNB #1 and the gNB #2 is in the RRC_CONNECTED state. In Step ST1705, the UE transmits and receives data to and from the gNB #1.

In Step ST1707 of FIG. 17, the UE generates data for the gNB #2. In Step ST1709, the UE notifies the gNB #1 that the connection target of its own UE is switched to the gNB #2. The UE may give the notification in Step ST1709 via the L1/L2 signaling, the MAC signaling, or the RRC signaling. In response to the notification in Step ST1709, the gNB #1 stops scheduling for the UE. In Step ST1711, the UE stops the RLF timers for the gNB #1. Examples of the RLF timers may include the T310, N310, and N311 disclosed in Non-Patent Document 22 (TS38.331), and combinations of these.

In Step ST1713 of FIG. 17, the gNB #2 transmits the SS block to the UE. In Step ST1715, the UE establishes the downlink synchronization with the gNB #2 upon receipt of the SS block in Step ST1713.

In Step ST1717 of FIG. 17, the UE and the gNB #2 perform the random access procedure. The random access procedure in Step ST1717 may be random access with two steps of transmission of the PRACH from the UE to the gNB #2 and an RA response from the gNB #2 to the UE. This enables, for example, prompt completion of the random access procedure between the UE and the gNB #2. In Step ST1719, the UE resumes the RLF timers for the gNB #2. In the resumption, the RLF timers for the gNB #2 may be reset. The UE may perform Step ST1719 using completion of Step ST1717 as a trigger. The RLF timers for the gNB #2 may be the same as those for the gNB #1 which have been stopped in Step ST1711. In Step ST1721, the UE transmits and receives data to and from the gNB #2.

After completion of Step ST1721 of FIG. 17, the connection target of the UE is switched from the gNB #2 to the gNB #1. In Step ST1723, the UE notifies the gNB #2 that the connection target of its own UE is switched to the gNB #1. The UE may give the notification in Step ST1723 via the same signaling as that in Step ST1709. In Step ST1731, the UE stops the RLF timers for the gNB #2. In Step ST1733, the gNB #1 transmits the SS block to the UE. In Step ST1735, the UE establishes the downlink synchronization with the gNB #1 upon receipt of the SS block in Step ST1733.

In Step ST1737 of FIG. 17, the UE and the gNB #1 perform the random access procedure. The random access procedure in Step ST1737 may be identical to that in Step ST1717. In Step ST1739, the UE resumes the RLF timers for the gNB #1. In the resumption, the RLF timers for the gNB #1 may be reset. In Step ST1741, the UE transmits and receives data to and from the gNB #1.

Although FIG. 17 illustrates the random access with two steps of Step ST1717 and ST1737, a random access procedure with four steps may be used. When the random access with four steps is used, the base station may reconfigure the RRC parameter for the UE. This can, for example, increase the flexibility in the communication system.

Another solution is disclosed. The UE need not stop the RLF timers for the base station #1. After expiration of the RLF timers for the base station #1, the UE need not perform an RLF procedure. The RLF procedure may be, for example, transition to RRC_IDLE, the procedure disclosed in 5.3.10.3 of Non-Patent Document 22 (TS38.331), or a combination of the two. This can, for example, avoid the complexity in the control of the RLF timers in the UE.

After the transmission/reception target of the UE is switched to the base station #1 again, the UE should reset the timers for the base station #1. This can, for example, prevent erroneous detection of an RLF when the transmission/reception target of the UE is switched to the base station #1 again.

Another solution is disclosed. The UE may detect an RLF with the base station #1 when the transmission/reception target is switched from the base station #1 to the base station #2. The UE need not perform a part of the RLF procedure with the base station #1. For example, the UE need not transition to RRC_IDLE. In the RRC re-establishment operations disclosed in 5.3.7 of Non-Patent Document 22 (TS38.331), a radio bearer need not be stopped. The MAC need not be reset. The SCell of the Master Cell Group (MCG) need not be released. spCellcConfig need not be released. The DC need not be released. p-NR-FR1 need not be released. p-UE-FR1 need not be released. delayBudgetReportingConfig need not be released. The T342 need not be stopped. overheatingAssistanceConfig need not be released. The T345 need not be stopped.

The UE may select a cell. The timer (e.g., T311) for selecting a cell disclosed in Non-Patent Document 22 (TS38.331) may be started. This can, for example, avoid the complexity in a process of selecting a cell. As another example, the UE need not start the T311. This can, for example, prevent the UE from transitioning to RRC_IDLE upon expiration of the T311.

The UE may maintain the RRC parameter. The maintaining operation by the UE may be applied, for example, when the UE selects the same cell as that before detecting an RLF. This can, for example, reduce the amount of processing in re-establishing the RRC connection. As another example, the UE may release the RRC parameter. The releasing operation by the UE may be applied, for example, when the UE selects a cell different from that before detecting an RLF. This can, for example, increase the flexibility in the communication system.

The method disclosed in the second embodiment may be applied to a beam failure. For example, the number of beam failure instance indications disclosed in 9.2.8 of Non-Patent Document 16 (TS38.300), and/or timers and/or counters associated with the number of beam failure instance indications may be stopped or resumed in switching a transmission/reception target of the UE. Examples of the timers and/or counters include the beamFailureRecoveryTimer, the beamFailureDetectionTimer, and BFI COUNTER which are disclosed in Non-Patent Document 17 (TS38. 321). This can, for example, prevent erroneous detection of a beam failure when transmission and reception of the UE are switched.

When the method disclosed in the second embodiment is applied, the transmission/reception target need not be switched until reception of a random access response. As another example, the transmission/reception target need not be switched until reception of the message 4 in the random access procedure. The operation may be applied, for example, when the UE transmits the PRACH to the base station. This can, for example, prevent a failure in the random access procedure.

When the method disclosed in the second embodiment is applied, the connection between the UE and a NW of the base station before the transmission/reception target is switched (e.g., the NAS connection) may be maintained. This enables, for example, the UE to promptly be reconnected to the NW of the base station. As another example, the connection between the UE and the NW may be released. This can, for example, reduce the memory usage in the UE.

The method disclosed in the second embodiment may be applied to beam management and/or beam measurement. For example, the UE may include information indicating that a beam cannot be measured in a measurement result report to the base station, and notify the information. The UE may notify the base station of the information indicating that a beam cannot be measured, for example, when switching the transmission/reception target to a base station in another NW. The UE may include, in the notification, information on a cause of a measurement failure. The cause may be, for example, switching of a transmission/reception target. The base station may control the beam for the UE, using the information. This can, for example, prevent the base station from erroneously determining that the quality of the beam to be used with the UE is inferior.

The method disclosed in the second embodiment may be used in the random access procedure. For example, when the transmission/reception target base station of the UE is switched from the gNB #1 to the gNB #2, a contention resolution timer for the gNB #1, for example, the ra-ContentionResolutionTimer disclosed in Non-Patent Document 17 (TS38.321) may be stopped. This can, for example, prevent erroneous detection of a collision in the random access procedure after the transmission/reception target base station is switched.

When the transmission/reception target base station of the UE is switched from the gNB #1 to the gNB #2, the contention resolution timer for the gNB #1 may be started or resumed. The timer may be started or resumed from an initial value. This can, for example, avoid the complexity in managing the timer of the UE. As another example, the contention resolution timer may be resumed from a value after stopping the contention resolution timer. This enables, for example, the UE to promptly detect a collision between random accesses.

Although the second embodiment discloses a case where the UE is connected to the base stations #1 and #2, the number of base stations to which the UE is connected may be three or more. For example, the method disclosed in the second embodiment may be used for switching the transmission/reception target from the base station #1 to a base station #3. For example, the method disclosed in the second embodiment may be used for switching the transmission/reception target from the base station #3 to a base station #4. This enables, for example, the UE to flexibly switch the transmission/reception target base station.

The method disclosed in the second embodiment may be used in the MAC procedure. For example, when the transmission/reception target base station of the UE is switched from the gNB #1 to the gNB #2, a timer that manages an operating state of the SCell for the gNB #1 (e.g., SCellDeactivationTimer disclosed in Non-Patent Document 17 (TS38.321)) may be stopped. The timer may be resumed when the transmission/reception target of the UE is switched to the gNB #1 again. This can, for example, prevent expiration of the timer after the transmission/reception target base station of the UE is switched from the gNB #1 to the gNB #2. Consequently, the amount of processing for reactivating the SCell in the UE can be reduced.

The operation may be applied to a timer that manages an operating state of the Bandwidth Part (BWP) for the gNB #1 (e.g., bwp-InactivityTimer disclosed in Non-Patent Document 17 (TS38.321)). This can, for example, reduce the amount of processing for reactivating the BWP in the UE as previously described.

The operation may be applied to a timer that manages the activity for transmitting data for the gNB #1 (e.g., dataInactivitiTimer disclosed in Non-Patent Document 17 (TS38.321)). This can, for example, prevent the UE from transitioning to RRC_IDLE as previously described.

The method disclosed in the second embodiment may be used in the RLC procedure. The operation may be applied, for example, to a timer to be used for a process of reassembling the RLC PDU for the gNB #1 (e.g., t-Reassembly disclosed in Non-Patent Document 29 (TS38.322)). This can, for example, reduce the number of processes of confirming a status in the RLC (e.g., transmission of RLC STATUS PDU) as previously described.

The method disclosed in the second embodiment may be used in the PDCP procedure. The operation may be applied, for example, to a timer to be used for managing to discard the PDCP SDU for the gNB #1 (e.g., discardTimer disclosed in Non-Patent Document 30 (TS38.323)). This can, for example, prevent discarding of the PDCP SDU as described above. This can prevent a packet loss in the communication system.

The operation may be applied to a timer to be used for controlling reordering the PDCP (e.g., t-Reordering disclosed in Non-Patent Document 30 (TS38.323)). This can, for example, prevent transmitting, to the upper layer, reception data being reordered as described above. Consequently, the reordering process in the upper layer can be reduced.

The second embodiment can prevent expiration of the RLF timers when a multi-SIM-mounted UE is connected to a base station in the source NW while performing transmission and reception with a base station in another NW. This saves the UE from re-establishing the RRC connection with the base station in the source NW.

### The Third Embodiment

The survival time indicating an acceptable communication failure time from a communication failure to an application layer failure (see Non-Patent Document 23 (TR22.832 V17.1.0)) may be used for controlling the QoS in a NW.

However, none discloses a method for controlling the QoS using the survival time. Thus, the NW has problems of failing to control the communication using the survival time and failing to perform communication with requirements of the application layer satisfied.

The third embodiment discloses a method for solving the problems.

A QoS parameter on the survival time is provided. A NW device may notify the UE of the QoS parameter on the survival time. The QoS parameter to be notified from the NW device to the UE may be a QoS parameter on the survival time in the downlink communication. The UE may notify the NW device of the QoS parameter on the survival time. The QoS parameter to be notified from the UE to the NW device may be a QoS parameter on the survival time in the uplink communication.

The following (1) to (16) are disclosed as example QoS parameters on the survival time.
(1) A survival time value
(2) A mean time between failures (MTBF)
(3) A mean time to repair (MTTR)
(4) A mean up time (MUT)
(5) A mean down time (MDT)
(6) Inherent availability
(7) Operation availability
(8) A tolerable latency
(9) The allowable number of excessive latencies
(10) The allowable number of consecutive excessive latencies
(11) The allowable number of undelivered communications
(12) The allowable number of consecutive undelivered communications
(13) A communication cycle
(14) An RLC layer occupancy
(15) A PDCP layer occupancy
(16) Combinations of (1) to (15) above

On (1), for example, the core NW device, the base station, and/or the UE may use the survival time value itself for the QoS control. For example, requirements of the survival time may be added to the table of the 5QI described in Non-Patent Document 27 (TS23.501). This can, for example, avoid the complexity in the QoS control using the survival time.

(2) may be, for example, a value calculated by treating expiration of a timer of the survival time as a failure. The core NW device, the base station, and/or the UE may configure a communication path between the base station and the UE, using the value of (2). This can, for example, avoid the complexity in the control of the reliability in the communication.

(3) may be, for example, a duration from the timing when the requirements of the survival time are not satisfied until the communication path is recovered. The core NW device, the base station, and/or the UE may configure a communication path between the base station and the UE, using the value of (3). This, for example, produces the same advantage as that of (2).

(4) may be, for example, a mean time until an application operates with the requirements of the survival time satisfied. The core NW device, the base station, and/or the UE may configure a communication path between the base station and the UE, using the value of (4). This, for example, produces the same advantage as that of (2).

(5) may be, for example, a mean time until an application is stopped without satisfying the requirements of the survival time. The core NW device, the base station, and/or the UE may configure a communication path between the base station and the UE, using the value of (5). This, for example, produces the same advantage as that of (2).

(6) may be, for example, a parameter calculated by MTBF/(MTBF + MTTR) using (2) and (3) above. The core NW device, the base station, and/or the UE may configure a communication path between the base station and the UE, using the value of (6). This, for example, produces the same advantage as that of (2).

(7) may be, for example, a parameter calculated by MUT/(MUT + MDT) using (4) and (5) above. The core NW device, the base station, and/or the UE may configure a communication path between the base station and the UE, using the value of (7). This, for example, produces the same advantage as that of (2).

For example, the Packet Delay Budget disclosed in 5.7.3.4 of Non-Patent Document 27 (TS23.501) may be used as information of (8). (8) may be used when communication is cyclically performed in a communication path, or used for a non-cyclical communication. The core NW device, the base station, and/or the UE may assign the QoS to data to be transmitted and received or perform scheduling, using the value of (8). This can, for example, prevent an excessive latency of data in a communication path from seriously affecting the application.

(9) may be used, for example, when communication is cyclically performed in a communication path. (9) may be, for example, a value calculated using a survival time value and allowable latency, e.g., a value obtained by dividing the survival time value by the allowable latency. The core NW device, the base station, and/or the UE may assign the QoS to data to be transmitted and received or perform scheduling, using the value of (9). This, for example, produces the same advantage as that of (8).

(10) may be used, for example, when communication is cyclically performed. (10) may be a value calculated in the same manner as (9). (10) can, for example, prevent erroneously detecting scattered excessive latencies as exceeding the survival time in the communication system.

(11) may be used, for example, when data is not discarded after the latency is exceeded. This can, for example, prevent an application failure due to an excessive latency in a communication system where the excessive latency is not critical.

(12) may be used, for example, when data is not discarded after the latency is exceeded. (12) can, for example, prevent erroneously detecting scattered undelivered communications as exceeding the survival time in the communication system.

(13) may be used, for example, when communication is cyclically performed in a communication path. The core NW device, the base station, and/or the UE may assign the QoS to data to be transmitted and received or perform scheduling, using the value of (13). This, for example, produces the same advantage as that of (8).

(14) may be used, for example, when communication is cyclically performed in a communication path. (14) may be calculated using, for example, a survival time value, a cycle of the communication, and the size of data to be transmitted and received per cycle. (14) may be an occupancy in an RLC entity in a receiver. This can, for example, promptly reflect a reception state of the receiver on the QoS control. As another example, the value of (14) may be an occupancy in an RLC entity in a transmitter. This can, for example, reflect only data with acknowledgment on the QoS control. Consequently, the QoS control closer to the control state in the upper layer is possible.

(15) may be calculated using, for example, a survival time value, a cycle of the communication, and the size of data to be transmitted and received per cycle. Similarly to (14), (15) may be an occupancy in a PDCP entity in a receiver, or an occupancy in a PDCP entity in a transmitter. The use of the occupancy in a PDCP layer enables, for example, the QoS control closer to the control state in the upper layer.

On (16), for example, the survival time may be a product of the allowable number of consecutive undelivered communications and a communication cycle.

(1) to (16) above and the existing QoS parameters, for example, the QoS parameter disclosed in 5.7.2 of Non-Patent Document 27 (TS23.501) may be used in combination. This enables, for example, flexible QoS control.

The AF may notify information on the survival time (e.g., a survival time value). The notification may be, for example, a notification requesting the 5G system to satisfy the survival time. The notification may include information on the communication in which the survival time should be satisfied. The information on the communication in which the survival time should be satisfied may include, for example, information on transmission and reception hosts (e.g., a source IP address, a target IP address, a source port number, and/or a target port number), or information on transmission data (e.g., information indicating TCP or UDP).

The AF may notify the core NW device of the information. Examples of the core NW device may include the PCF, the UDM, the SMF, the AMF, the UPF, and the Network Data Analytics Function (NWDAF, see Non-Patent Document 31(TS23.288)). The core NW device may perform the QoS control in the communication system, using the information. The core NW device may, for example, convert the information into (2) to (16) disclosed as the example QoS parameters on the survival time, into the existing QoS parameters, or into both of them. As one example of the conversion, the allowable number of consecutive excessive latencies may be calculated using a survival time value and a tolerable latency, for example, by dividing the survival time value by a tolerable latency value.

For example, the NWDAF may convert the information from the AF into the QoS parameter to be used in the communication system. The NWDAF may convert information obtained by its own NWDAF (e.g., input data disclosed in 6.4.2 of Non-Patent Document 31 (TS23.288)) into the QoS parameter. Information on how often a signal is shielded to be disclosed in the third modification of the third embodiment may be used. This enables, for example, the QoS control on which a state in the communication system has been reflected, and reduction in the amount of signaling for calculating the QoS parameter.

As another example, the AF may notify the core NW device of (1) to (16) disclosed as the example QoS parameters on the survival time. Examples of the core NW device may include the PCF, the UDM, the SMF, the AMF, the UPF, and the Network Data Analytics Function (NWDAF, see Non-Patent Document 31 (TS23.288)) as previously described. The core NW device may perform the QoS control in the communication system, using the information. This can, for example, reduce the amount of processing for the QoS control in the core NW device.

Information on the survival time may be changed (e.g., updated or modified). The NW device may notify the UE of change in the QoS parameter on the survival time. The AF may notify the core NW device of the change. The notification may include (1) to (16) disclosed as the example QoS parameters on the survival time. As another example, the notification may include information on a cause of the change. The cause of the change may be, for example, an environmental change in the application (e.g., a period during which the application is used or change in the season), or another cause.

The core NW device may request the AF to change the information on the survival time. The request may include information on a cause of change in the information. The information on the cause may include, for example, information indicating that the AF issues too many requests on the survival time, or a state indicating that the requests on the survival time from the AF will not be satisfied. In response to the request, the AF may change the QoS parameter on the survival time. This enables, for example, flexible operations in the communication system.

As another example, the base station may request the AF to change the information on the survival time. The base station may issue the request to the AF through the core NW device. As another example, the UE may issue the request. The UE may issue the request to the AF through the base station and the core NW device. In response to the request, the AF may change the information on the survival time. This can, for example, prevent an application failure due to dissatisfaction with the requirements on the survival time in the communication system.

A plurality of information on the survival time may be configured for one UE. For example, a plurality of applications may configure information on the survival time for one UE. The plurality of information may be, for example, some combinations of (1) to (16) disclosed as the example QoS parameters on the survival time and/or the existing QoS parameters. The UE may communicate with the base station, using the information. This enables, for example, flexible QoS control on different applications.

A plurality of the configurations on one UE may be applied to the core NW device or the base station. The core NW device and/or the base station may perform the QoS control or scheduling for the UE, using the configurations. This enables, for example, efficient scheduling in the communication system.

One application may configure a plurality of information on the survival time. For example, different pieces of information may be configured using information for controlling the application and actual data. The configuration from the application may be applied to the core NW device or the UE. This can, for example, increase the efficiency of the QoS control in the application.

The information on the survival time may include information on a validity period. For example, a validity period may be provided when the survival time differs as time passes. This enables, for example, flexible QoS control in the communication system.

A default value may be provided for the information on the survival time. The default value may be defined in a standard, or determined by the core NW device, the AF, or the base station. When the information on the survival time is not configured, each device in the communication system may communicate using the default value. Upon expiration of the validity period, the default value may be used. This can, for example, prevent a malfunction in the communication system.

The QoS control using the survival time may be performed in the DC. The base station in the MCG may perform the QoS control using the survival time in the DC. This can, for example, avoid the complexity in the QoS control during the DC. As another example, the Secondary Cell Group (SCG) may perform the QoS control. This can, for example, reduce the amount of processing in the MCG. As another example, each of the MCG and the SCG may perform the QoS control. This can increase the flexibility of the QoS control.

As another example, a cell group through which the QoS flow subjected to the QoS control passes may perform the QoS control. For example, when the QoS flow passes through the MCG bearer, the MCG may perform the QoS control. When the QoS flow passes through the split bearer, each of the MCG and the SCG may perform the QoS control. This can, for example, increase the flexibility of the QoS control. As another example, when the QoS flow passes through the split bearer, the MCG may perform the QoS control. This can, for example, avoid the complexity in the QoS control.

As another example, a cell group performing the SDAP procedure may perform the QoS control. The cell group may be the MCG or the SCG. This enables, for example, the same cell group to map the QoS flow and perform the QoS control. Consequently, the amount of processing for mapping the QoS flow and performing the QoS control can be reduced.

As another example, a cell group performing the PDCP procedure may perform the QoS control. The QoS control may be applied, for example, when processes in the second modification of the third embodiment are performed. This can, for example, reduce the amount of processing in the communication system during the processes in the second modification of the third embodiment.

As another example, a cell group performing the RLC procedure may perform the QoS control. This enables, for example, flexible QoS control in consideration of the RLC ARQ.

As another example, a cell group performing the MAC procedure may perform the QoS control. The QoS control may be applied, for example, when processes in the first modification of the third embodiment are performed. This can, for example, reduce the amount of processing in the communication system during the processes in the first modification of the third embodiment.

The MCG may notify the SCG of information on the survival time. The information may be, for example, (1) to (16) disclosed as the example QoS parameters on the survival time. This can, for example, prevent a variance of the survival time in the QoS control between the MCG and the SCG. Consequently, the stability of operations in the communication system can be increased.

The information on the survival time may be obtained (or monitored). The information to be monitored may be, for example, (1) to (16) disclosed as the example QoS parameters on the survival time. For example, the timer of the survival time on (1) may be provided.

The UE may monitor the information. A layer that monitors the information in the UE may be the RRC, the SDAP, the PDCP, the RLC, or the MAC. As another example, the V2X layer in the sidelink (see Non-Patent Document 28 (TS23.287)) may monitor the information. The layer that monitors the information may have, for example, the timer of the survival time. For example, when the layer receives the HARQ Nack or the DCI for retransmission, the timer may be started. This enables, for example, the UE to promptly reflect undelivered transmission in the HARQ layer on the timer of the survival time.

The UE may notify the base station of the monitored information. The UE may give the notification via the RRC signaling. This enables, for example, the UE to notify the base station of a large amount of information. As another example, the UE may give the notification via the MAC signaling. This enables, for example, the UE to promptly give the notification to the base station.

As another example, the UE may give the notification via the L1/L2 signaling. This enables, for example, the UE to further promptly give the notification to the base station. In response to the information, the base station may control the communication system. For example, when the number of consecutive undelivered communications is larger than or equal to a predetermined value, the base station may change a coding rate in the scheduling for the UE. This can, for example, prevent the survival time from expiring.

As another example, the UE may notify the AMF of the information. The UE may give the notification via the NAS signaling. In response to the information, the AMF may control the communication system.

As another example of the monitoring, the base station may monitor the information. For example, the CU or the DU may monitor the information. A layer that monitors the information in the base station may be the RRC, the SDAP, the PDCP, the RLC, or the MAC. The layer that monitors the information may have, for example, the timer of the survival time. For example, when the layer receives the HARQ Nack or the DCI for retransmission, the timer may be started. This enables, for example, the base station to promptly reflect undelivered transmission in the HARQ layer on the timer of the survival time.

The base station may notify the UE of the monitored information. As another example, the base station may notify the AMF of the information. In response to the information, the AMF may control the communication system.

As another example of the monitoring, the core NW device may monitor the information. The core NW device may be the UPF, the AMF, or the SMF. For example, the UPF may monitor the information on the U-plane data, whereas the AMF may monitor the information on the C-plane data. The AMF may monitor the information on small data.

The third embodiment enables both of the NW device and the UE to perform the QoS control using the survival time. Consequently, the NW device and the UE can perform the communication with the requirements of the application layer satisfied.

### The First Modification of the Third Embodiment

The QoS control using the survival time may be performed in the MAC. The MAC layer in the UE and/or the base station may have a timer of the survival time. In the communication system, for example, transmission of data with a short time until expiration of the timer of the survival time may be preferentially scheduled.

The timer of the survival time may be provided for each logical channel. This can, for example, increase the flexibility in the communication system.

A parameter indicating a priority in the MAC scheduling (see Non-Patent Document 17 (3GPPTS38.321 V15.8.0)) may be dynamically variable. For example, a value obtained by subtracting a predetermined value (may be hereinafter referred to as a priority offset) from a priority value in Non-Patent Document 17 using the time until expiration of the survival timer may be used in the scheduling. The parameter indicating a priority may be a parameter indicating a higher priority as a value is lower.

The subtracted priority value need not be less than a predetermined threshold. When the subtracted priority value is less than a predetermined threshold, the UE may set the subtracted priority value identical to the predetermined threshold. The predetermined threshold may be defined in a standard, or determined and notified to the UE by the base station. This can, for example, prevent the subtracted priority value from falling out of a range predefined in a standard. Consequently, a malfunction in the LCP can be prevented. As another example, excessive increase in the priority can be prevented using the priority offset.

The priority offset may be a uniform value within the tolerance of the survival time. This can, for example, avoid the design complexity in the LCP.

As another example, the priority offset may be variable within the tolerance of the survival time. For example, when the remaining time until expiration of the timer of the survival time is less, the priority offset may be increased. This enables, for example, preferential retransmission of the HARQ when the retransmission of the HARQ is necessary. Consequently, the retransmission is possible before the timer of the survival time expires.

The priority offset may be given per scheduling time unit. For example, as time progresses, a higher value of the priority offset may be set within a time range until expiration of the timer of the survival time. In addition to the aforementioned advantages, for example, the logical channels in the LCP can be flexibly assigned. The scheduling time unit may be subframe, slot, mini-slot, or symbol.

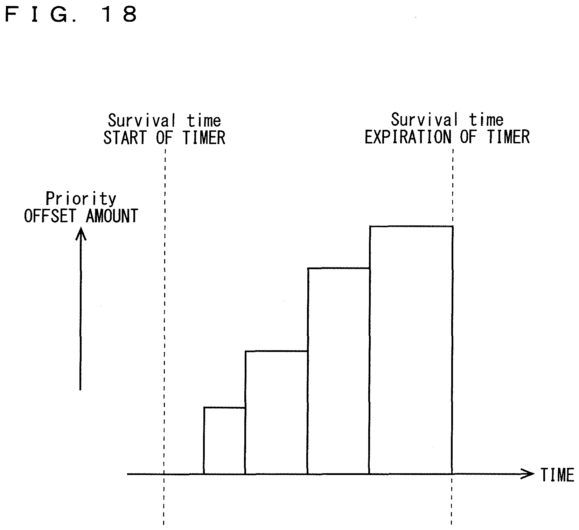

FIG. 18 is a diagram exemplifying provision of a priority offset in a logical channel with requirements of the survival time. FIG. 18 illustrates an example of increasing a priority offset as the remaining time of the timer of the survival time is less after the timer is started.

FIG. 18 illustrates an example where the time in which the priority offset value is fixed differs for each offset value. In contrast, the time in which the priority offset value is fixed may be fixed, irrespective of the offset value. This can, for example, avoid the design complexity in the LCP processes of the UE.

The priority offset may be predefined in a standard. For example, a uniform offset amount may be defined. Alternatively, an offset amount may be defined for each scheduling timing. Alternatively, an offset amount may be associated with a range of the remaining time until expiration of the timer of the survival time and defined. As the association example between the range of the remaining time and the offset amount, a time range from start to expiration of the timer of the survival time may be divided, and an offset amount may be defined for each of the divided ranges. For example, an offset amount in a range from start of the timer of the survival time to the remaining half to the expiration and an offset amount in a range from the remaining half to the expiration up to the expiration may be defined.

The logical channel to which the priority offset is applied may be predefined in a standard. The priority offset may be applied to, for example, a logical channel with the configured requirements of the survival time. This can, for example, increase a priority of the logical channel more than other logical channels. Consequently, the requirements of the survival time can be satisfied.

As another example, the base station may determine the priority offset and notify it to the UE. The base station may give the notification, for example, via the RRC signaling. The notification may include information on the logical channel. The information may include information on the offset amount. The UE may apply the offset included in the notification to the logical channel included in the notification. The information on the offset amount may be information similar to that predefined in a standard. This enables, for example, the base station to notify the UE of a large amount of information. Consequently, the flexibility in configuring the priority offset can be increased.

As another example, the base station may give the notification via the MAC signaling. The notification may include information on the logical channel or information on the offset. The information on the offset may be information similar to the offset amount predefined in a standard. The UE may apply the offset included in the notification to the logical channel included in the notification. This enables, for example, the UE to promptly apply the offset.

As another example, the base station may give the notification via the L1/L2 signaling. The notification may include information on the logical channel or information on the offset. The notification may be included in the DCI including a scheduling grant, included in different DCI, or transmitted via different L1/L2 signaling. The information on the offset may be information similar to the offset amount predefined in a standard, or the offset amount applied in the grant. This enables, for example, the UE to further promptly apply the offset.

A plurality of information on an offset amount may be provided. The plurality of information may be defined in a standard, determined and notified to the UE by the base station, or determined and notified to the UE through the base station by the high-level NW device. The base station may notify the UE of an identifier of information to be used, in the plurality of information. The base station may notify the identifier via the RRC signaling, the MAC signaling, or the L1/L2 signaling. The notification may include information on the logical channel to which the offset is applied. The UE may calculate information to be used, using the identifier. The base station may determine the information to be used, using a configuration from the high-level NW device, for example, the QoS parameter. Alternatively, the base station may determine the information to be used, using information on network slicing. This can, for example, reduce the amount of signaling from the base station to the UE.

The following (1) to (6) are disclosed as examples of information on the offset amount of the priority to be notified from the base station to the UE.
(1) A survival time value
(2) Information on the logical channel to which the priority offset is applied
(3) The number of patterns of the priority offset to be provided
(4) A priority offset value
(5) The remaining time of the timer of the survival time to which the priority offset is applied
(6) Combinations of (1) to (5) above

Information (1) may be a value of the timer of the survival time. The information (1) may be, for example, information including the allowable number of consecutive undelivered transmissions and a transmission cycle. The information (1) may be, for example, an initial value of the timer of the survival time. This can, for example, avoid the complexity in configuring the priority offset in the UE.

Information (2) may be, for example, an identifier of a logical channel (a logical channel ID (LCID)). This enables, for example, the MAC layer of the UE to promptly determine a logical channel to which the priority offset is provided.

Information (3) may be the number of steps of the priority offset to be provided in the logical channel. The number of steps may exclude or include a case without the priority offset. For example, when a fixed priority offset is provided from the remaining half to the expiration of the timer of the survival time up to the expiration, the value in (3) may be 1. This enables, for example, the MAC layer of the UE to promptly understand the number of steps of the priority offset. Consequently, a processing rate in the UE can be increased.

Information (4) may be a priority offset value to be provided in the logical channel. As another example, the information (4) may be an increment of the priority offset value. This enables, for example, appropriate provision of the priority offset to the logical channel in the UE. Consequently, the stability in the communication system can be increased.

Information (5) may be, for example, a value of the timer from which provision of the offset in (4) is started. This enables, for example, appropriate provision of the priority offset to the logical channel in the UE. Consequently, the stability in the communication system can be increased.

A plurality of information of (4) and (5) may be provided. The number of the plurality of information may be, for example, as many as the value in (3). This enables, for example, appropriate provision of the priority offset to the logical channel in the UE. Consequently, the stability in the communication system can be increased.

The UE may provide an offset to a priority value, using the information notified from the base station. The UE may provide the offset for each logical channel or for each HARQ process ID.

The UE may start the timer of the survival time using reception of the HARQ Nack or the scheduling information for HARQ retransmission as a trigger. The base station may start the timer of the survival time in transmitting the HARQ Nack or the scheduling information for HARQ retransmission to the UE. This can prevent a variance in the timer value of the survival time between the UE and the base station. Consequently, a malfunction in the communication system can be prevented.

The method disclosed in the first modification may be applied after expiration of the timer of the survival time. For example, a predetermined priority offset may be provided after expiration of the timer of the survival time. The predetermined priority offset may be provided, for example, during the application recovery time described in Non-Patent Document 23 (TR22.832). The priority offset after expiration of the timer of the survival time may be configured in the same manner as that before expiration of the timer. The UE may provide a priority offset after expiration of the timer of the survival time, using the configuration. This enables, for example, prompt recovery from an application failure state due to expiration of the timer of the survival time.

The first modification enables the UE to preferentially transmit data when the remaining time until expiration of the timer of the survival time is less. This can prevent the timer of the survival time from expiring.

### The Second Modification of the Third Embodiment

The survival time may be used in controlling the packet duplication. For example, a packet may be automatically duplicated when the timer of the survival time is started. For example, upon receipt of the scheduling information for HARQ retransmission, the UE may automatically start duplicating a packet. The scheduling information may include scheduling information to be used for transmitting a packet to be duplicated.

Here, the following problem occurs. Discussion on whether the number of packets to be duplicated is four at the maximum has been made (see Non-Patent Document 24 (3GPP RP-192590)). Since none discloses the number of packets to be duplicated in the automatic packet duplication, the UE and the base station have a variance in operations. For example, although the base station expects four duplicated packets, the UE may duplicate a packet into two and transmit the packets. This causes inefficient use of reception resources in the base station.

The second modification discloses a method for solving the problem.

The number of packets to be duplicated is controlled using the survival time. The UE implicitly changes the number of packets to be duplicated using the survival time. For example, the UE may vary the number of packets to be duplicated using the time until expiration of the survival timer. The base station implicitly controls the number of packets to be duplicated using the timer of the survival time. The base station may, for example, schedule transmission resources to be used by the UE, using the time until expiration of the survival timer. For example, the number of packets to be duplicated may be increased as the expiration of the timer of the survival time is approaching.

The implicit packet duplication may be implicitly controlling activation/deactivation of a leg to be used in the packet duplication.

The CA may be used in the implicit packet duplication. The base station may notify the UE of information on a cell to be used in the implicit packet duplication. In response to the information, the UE may perform transmission and reception with the base station using the cell in the implicit packet duplication. This, for example, produces advantages of the frequency diversity in the implicit packet duplication. Consequently, the reliability in the implicit packet duplication can be enhanced.

The DC may be used in the implicit packet duplication. The base station may notify the UE of information on the cell to be used in the implicit packet duplication. The notification from the base station to the UE may include information on a cell in the MCG or information on a cell in the SCG. The UE may notify a cell group added in the DC of information indicating start of the implicit packet duplication. The cell group may be the SCG or the MCG. In response to the notification from the UE, the cell group may start an operation of receiving duplicated packets, or transmit the packets. This, for example, produces advantages of the frequency diversity and space diversity in the implicit packet duplication. Consequently, the reliability in the implicit packet duplication can be enhanced.

The combination of the CA and the DC may be used for the implicit packet duplication. The UE may notify the cell group added in the DC of information indicating start of the implicit packet duplication, in the packet duplication using the combination of the CA and the DC.

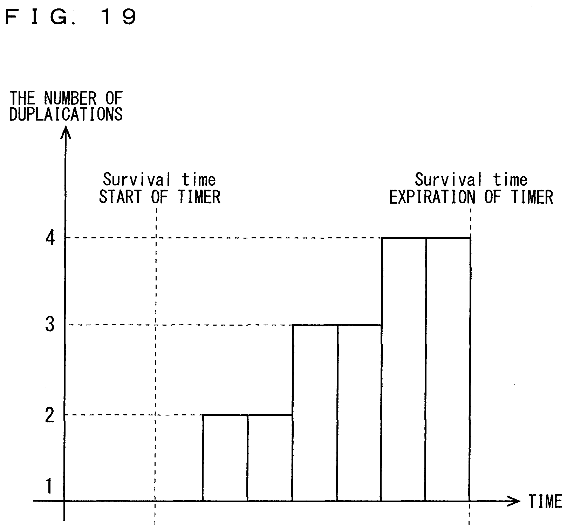

FIG. 19 is a diagram exemplifying implicit control on the number of packets to be duplicated in the logical channel with requirements of the survival time. FIG. 19 illustrates an example of increasing the number of packets to be duplicated as the remaining time of the timer of the survival time is less after the timer is started.

FIG. 19 illustrates an example where the time in which the number of packets to be duplicated is fixed differs for each number of packets to be duplicated. In contrast, the time in which the number of packets to be duplicated is fixed may be fixed, irrespective of the number of packets to be duplicated. This can, for example, avoid the design complexity in the packet duplication processes in the UE.

The number of packets to be duplicated may be predefined in a standard. For example, a consistent number of packets to be duplicated may be defined. Alternatively, the number of packets to be duplicated may be defined for each scheduling timing. Alternatively, the number of packets to be duplicated may be associated with a range of the remaining time until expiration of the timer of the survival time and defined. As the association example between the range of the remaining time and the number of packets to be duplicated, a time range from start to expiration of the timer of the survival time may be divided, and the number of packets to be duplicated may be defined for each of the divided ranges. For example, the number of packets to be duplicated in a range from start of the timer of the survival time to the remaining half to the expiration and the number of packets to be duplicated in a range from the remaining half to the expiration up to the expiration may be defined.

The logical channel in which the number of packets to be duplicated is implicitly controlled may be predefined in a standard. For example, the number of packets to be duplicated may be implicitly controlled in the logical channel with the configured requirements of the survival time. This enables, for example, automatic application of the packet duplication in the logical channel. Consequently, the reliability of the logical channel can be enhanced.

As another example, the base station may determine the number of packets to be duplicated and notify it to the UE. The base station may give the notification, for example, via the RRC signaling. The notification may include information on the logical channel. The information may include information on the number of packets to be duplicated, or information on the remaining time of the timer of the survival time. The UE may apply the number of packets to be duplicated which is included in the notification, to the logical channel included in the notification. The information on the number of packets to be duplicated may be information similar to that predefined in a standard. This enables, for example, the base station to notify the UE of a large amount of information. Consequently, the flexibility in implicitly controlling the number of packets to be duplicated can be increased.

As another example, the base station may give the notification via the MAC signaling. The notification may include information on the logical channel, information on the remaining time of the timer of the survival time, or information on the number of packets to be duplicated. The information on the number of packets to be duplicated may be information similar to that predefined in a standard. The UE may apply the number of packets to be duplicated which is included in the notification, to the logical channel included in the notification. This enables, for example, the UE to promptly reflect the control on the number of packets to be duplicated.

As another example, the base station may give the notification via the L1/L2 signaling. The notification may include information on the logical channel, information on the remaining time of the timer of the survival time, or information on the number of packets to be duplicated. The notification may be included in the DCI including a scheduling grant, included in different DCI, or transmitted via different L1/L2 signaling. The information on the number of packets to be duplicated may be information similar to that predefined in a standard, or the number of packets to be duplicated which is applied in the grant. This enables, for example, the UE to further promptly apply the control on the number of packets to be duplicated.

A plurality of information on the number of packets to be duplicated may be provided. The plurality of information may be defined in a standard, determined and notified to the UE by the base station, or determined and notified to the UE through the base station by the high-level NW device. The base station may notify the UE of an identifier of information to be used, in the plurality of information. The base station may notify the identifier via the RRC signaling, the MAC signaling, or the L1/L2 signaling. The notification may include information on the logical channel to which the number of packets to be duplicated is applied. The UE may calculate information to be used, using the identifier. The base station may determine the information to be used, using a configuration from the high-level NW device, for example, the QoS parameter. Alternatively, the base station may determine the information to be used, using information on network slicing. This can, for example, reduce the amount of signaling from the base station to the UE.

The following (1) to (8) are disclosed as examples of information on the implicit control on the number of packets to be duplicated which are notified from the base station to the UE.
(1) A survival time value
(2) Information on a radio bearer to which the implicit control on the number of packets to be duplicated is applied
(3) The number of patterns of the number of packets to be duplicated
(4) The number of packets to be duplicated
(5) Whether to apply the DC
(6) Information on a cell to be used in the packet duplication
(7) The remaining time of the timer of the survival time to which the number of packets to be duplicated is applied
(8) Combinations of (1) to (7) above

Information (1) may be an initial value of the timer of the survival time, for example, information including the allowable number of consecutive undelivered transmissions and a transmission cycle. This can, for example, avoid the complexity in controlling the number of packets to be duplicated in the UE.

Information (2) may be, for example, a data radio bearer identifier (DRB-ID) before the packet duplication. This enables, for example, the PDCP layer of the UE to promptly determine a radio bearer in which the packet duplication is implicitly controlled.

Information (3) may be the number of patterns of packets to be duplicated which is given by the radio bearer. The number of patterns may exclude or include a case without the packet duplication. For example, when a packet is duplicated into four from the remaining half to the expiration of the timer of the survival time up to the expiration, the value in (3) may be 1. This enables, for example, the PDCP layer of the UE to promptly understand the number of patterns of the packet duplication. Consequently, a processing rate in the UE can be increased.

Information (4) may be the number of packets to be duplicated in the radio bearer. As another example, the information (4) may be an increment of the number of packets to be duplicated. This enables, for example, appropriate control of the packet duplication in the radio bearer in the UE. Consequently, the stability in the communication system can be increased.

As another example, the information (4) may include information on the number of packets to be duplicated in each of the MCG and the SCG. The information may be included, for example, when the DC is used in the implicit packet duplication. This can, for example, increase the flexibility in the implicit packet duplication.

Information (5) may be, for example, information indicating whether the DC is used in the implicit packet duplication with the timing in (7). In response to the information (5), the UE may start or stop the packet duplication using the DC. This can, for example, increase the flexibility in the implicit packet duplication.

Information (6) may be, for example, an identifier of a cell. The information (6) may include information on a cell in the MCG to be used in the implicit packet duplication, information on a cell in the SCG to be used in the implicit packet duplication, or both of them. The UE may perform transmission and reception with the base station, using the cell indicated by the information (6). This can, for example, reduce the amount of processing in the implicit packet duplication in the UE.

Information (7) may be, for example, a value of the timer from which the number of packets to be duplicated in (4) and/or the DC in (5) is started. This enables, for example, appropriate control of the packet duplication in the radio bearer in the UE. Consequently, the stability in the communication system can be increased.

A plurality of the information of (4) to (7) may be provided. The number of the plurality of information may be, for example, as many as the value in (3). This enables, for example, appropriate control of the packet duplication in the radio bearer in the UE. Consequently, the stability in the communication system can be increased.

The base station may change the configuration of the implicit packet duplication. The base station may change the configuration of the implicit packet duplication, for example, using a measurement report from the UE. The base station may notify the UE of the changed configuration. The notification of the changed configuration may include, for example, the information (1) to (8) disclosed as the information on the implicit control on the number of packets to be duplicated. This enables, for example, the base station to select an appropriate cell or cell group according to the communication quality with the UE. Consequently, the reliability in the communication can be enhanced.

The UE may start the timer of the survival time using reception of the HARQ Nack or the scheduling information for HARQ retransmission as a trigger, similarly to the first modification of the third embodiment. The base station may start the timer of the survival time in transmitting the HARQ Nack or the scheduling information for HARQ retransmission to the UE. This can prevent a variance in the timer value of the survival time between the UE and the base station. Consequently, a malfunction in the communication system can be prevented.

The UE may give the notification to the cell group via the L1/L2 signaling, the MAC signaling, or the RRC signaling. The L1/L2 signaling may be, for example, the SR. This L1/L2 signaling via which the UE gives the notification enables, for example, the UE to promptly give the notification to the cell group.

The UE may notify the cell group of information indicating stop of the implicit packet duplication. The UE may give the notification, for example, when the timer of the survival time is stopped or reset. In response to the notification from the UE, the cell group may stop an operation of receiving duplicated packets, or need not transmit the packets. This enables, for example, efficient use of frequency and time resources in the cell group. The UE may notify the cell group to stop the implicit packet duplication in the same manner as notifying start of the implicit packet duplication.

The UE may request the base station to change the configuration of the implicit packet duplication. Examples of the request for change may include a request for increasing the number of packets to be duplicated, a request for reducing the number of packets to be duplicated, a request for the packet duplication using the DC, a request for canceling the packet duplication using the DC, and combinations of these. In response to the request, the base station may change the configuration of the implicit packet duplication. The base station may notify the UE of the changed configuration. The notification of the changed configuration may include, for example, the information (1) to (8) disclosed as the information on the implicit control on the number of packets to be duplicated. This can, for example, enhance the reliability in the implicit packet duplication.

The UE may issue the request, for example, via the RRC signaling. The RRC signaling may be, for example, signaling requesting the RRC reconfiguration. The signaling may be newly provided. This enables, for example, the UE to transmit a large amount of information to the base station. As another example, the UE may issue the request via the MAC signaling. This enables, for example, the UE to promptly notify the base station of the request. As another example, the UE may issue the request via the L1/L2 signaling. This enables, for example, the UE to further promptly notify the base station of the request.

The method disclosed in the second modification may be applied after expiration of the timer of the survival time. For example, the implicit packet duplication may be performed after expiration of the timer of the survival time, or during the application recovery time described in Non-Patent Document 23 (TR22.832). The implicit packet duplication after expiration of the timer of the survival time may be configured in the same manner as that before expiration of the timer. The UE may perform the implicit packet duplication after expiration of the timer of the survival time, using the configuration. This enables, for example, prompt recovery from an application failure state due to expiration of the timer of the survival time.

The second modification enables the UE to enhance the reliability in transmitting data when the remaining time until expiration of the timer of the survival time is less. This can prevent the timer of the survival time from expiring.

### The Third Modification of the Third Embodiment

The scheduling using the survival time may be performed. For example, the scheduling for the UE may be automatically changed using the remaining time of the timer of the survival time. The UE may change the scheduling for its own UE using information on the remaining time of the timer of the survival time, and apply the scheduling.

The following (1) to (7) are disclosed as examples of automatically changing the scheduling using the survival time.
(1) A configured grant
(2) Information on a cell to be used for transmission and reception
(3) Information on a beam and/or an antenna panel to be used by the UE
(4) Information on a beam, an antenna panel, and/or a Transmission Reception Point (TRP) to be used by the base station
(5) Information on the base station to be a transmission/reception target of the UE
(6) Information on the UE with which transmission and reception are performed
(7) Combinations of (1) to (6) above

The configured grant in (1) may be, for example, a grant of allocating large frequency resources when the remaining time of the timer of the survival time is equal to a predetermined time. This enables, for example, the UE to transmit the uplink data at a low coding rate. This can consequently enhance the reliability of the communication.

In (2), for example, when the remaining time of the timer of the survival time is equal to a predetermined time, a cell at a low frequency may be used. This enables, for example, selection of a cell at a frequency with less shielding when the remaining time until expiration of the timer of the survival time is less. This can consequently enhance the reliability of the communication.

In (3), for example, when the remaining time of the timer of the survival time is equal to a predetermined time, the beam and/or antenna panel to be used by the UE may be designated. The beam to be used by the UE may be, for example, an SRS beam, or designated by information on a DMRS antenna port (e.g., a DMRS antenna port number). (3) may be applied, for example, in the uplink communication. This can, for example, enhance the reliability in the uplink communication.

The base station may measure an uplink signal from the UE to each antenna panel and/or TRP of its own base station. The uplink signal to be measured by the base station may be the SRS or the DMRS. The base station may measure how often a signal is shielded. The base station may hold an uplink measurement result. The base station may hold, for example, information on the reliability of the uplink signal (e.g., a database). This enables, for example, the base station to promptly select a beam, an antenna panel, and/or a TRP with high reliability.

In (4), for example, when the remaining time of the timer of the survival time is equal to a predetermined time, the beam and/or antenna panel to be used by the base station may be designated. (4) may be applied, for example, in the downlink communication. This can, for example, enhance the reliability in the downlink communication.

The UE may measure a downlink signal from each antenna panel and/or TRP of the base station. The UE may measure, for example, the CSI-RS or the SS block from the base station. The UE may measure information on how often the downlink signal is shielded. The UE may report information on the measurement result of the downlink signal to the base station. The UE may report, for example, a measurement result of how often the downlink signal is shielded to the base station. The information on the shielding frequency may be, for example, the number of times a received intensity of the downlink signal falls below a predetermined threshold within a predetermined time, or the time during which the received intensity of the downlink signal falls below the predetermined threshold. The base station may determine a beam, an antenna panel, and/or a TRP to be used for the downlink communication with the UE, using the information. This enables, for example, avoid the beam which is likely to be shielded in the downlink communication between the base station and the UE. This can consequently enhance the reliability in the downlink communication.

On (3) and/or (4), the base station may notify the Network Data Analytics Function (NWDAF, see Non-Patent Document 31 (TS23.288)) of a measurement result of the uplink signal and/or the downlink signal. The measurement result may include, for example, information on how often a signal is shielded. An interface between the base station and the NWDAF may be provided. The NWDAF may generate or hold information on the reliability of the uplink signal and/or the downlink signal (e.g., a database), using the measurement result. The NWDAF may notify the base station of the information on the reliability. The base station may determine, using the information on the reliability, a beam and/or an antenna panel to be used by the UE, or a beam and/or an antenna panel to be used by its own base station. This can, for example, reduce the amount of processing on (3) and (4) in the base station.

The UE may notify the NWDAF of the measurement result of the downlink signal. An interface between the UE and the NWDAF may be provided. The NWDAF may generate or hold information on the reliability of the downlink signal, using the information from the UE. This can, for example, reduce the amount of processing in the base station.

As another example, the Operations, Administration and Maintenance (OAM) may notify the NWDAF of information on how often a signal is shielded. The OAM may calculate how often a signal is shielded using the measurement result of the UE. The OAM may include notification of the information on how often a signal is shielded to the NWDAF, in notification of information on the RSRP, the RSRQ, or the SINR. This can, for example, reduce the amount of signaling in the communication system.

As another example, the NWDAF may calculate information on how often a signal is shielded. The NWDAF may calculate information on how often a signal is shielded using, for example, the information on the RSRP, the RSRQ, and/or the SINR that the Operations, Administration, and Maintenance (OAM) notifies to the NWDAF. The NWDAF may notify the information on how often a signal is shielded to the OAM, the base station, the AMF, the SMF, the UPF, the PCF, or the Application Function (AF). For example, the base station may determine information on (3) and/or (4), using the information on how often a signal is shielded. This can, for example, reduce the amount of signaling in the communication system and enhance the reliability of the communication between the base station and the UE.

Examples of (5) may include an identifier of the base station to be a transmission/reception target of the UE (e.g., a gNB-ID), an identifier indicating a master base station or a secondary base station, and a serial number given to the base station to which the UE is connected. Each of the identifiers may be applied, for example, when the UE uses the DC configuration or the multi-connectivity (e.g., a case where the UE is connected to three or more base stations). This, for example, produces advantages of the space diversity. Consequently, the reliability can be enhanced.

(6) may be, for example, a UE identifier (e.g., a UE-ID) or an identifier assigned to each UE in an application device. (6) may be applied, for example, when a plurality of UEs are mounted in one application device. This, for example, produces the same advantages as those of (5).

The base station may notify the UE of information on scheduling. The UE may perform transmission and reception with the base station, using the information.

The following (1) to (5) are disclosed as examples of information on the scheduling to be notified from the base station to the UE.
(1) A survival time value
(2) The number of patterns of automatic scheduling
(3) Information on the automatic scheduling
(4) The remaining time of the timer of the survival time to which the automatic scheduling is applied
(5) Combinations of (1) to (4) above

Information (1) may be the same as the information (1) disclosed as the information on the offset amount of the priority in the first modification of the third embodiment. This can, for example, avoid the complexity in configuring the automatic scheduling in the UE.

Information (2) may be the same as the information (3) disclosed as the information on the offset amount of the priority in the first modification of the third embodiment. This enables, for example, the UE to promptly understand the number of patterns of the automatic scheduling. Consequently, a processing rate in the UE can be increased.

Information (3) may be the information (1) to (7) disclosed as the examples of automatically changing the scheduling using the survival time in the third modification. This enables, for example, appropriate scheduling from the base station to the UE. Consequently, the stability in the communication system can be increased.

Information (4) may be the same as the information (5) disclosed as the information on the offset amount of the priority in the first modification of the third embodiment. This enables, for example, appropriate scheduling from the base station to the UE. Consequently, the stability in the communication system can be increased.

A plurality of the information of (3) to (4) may be provided. The number of the plurality of information may be, for example, as many as the value in (2). This enables, for example, appropriate scheduling from the base station to the UE. Consequently, the stability in the communication system can be increased.

The third modification enables the base station to schedule transmission of data for the UE with high reliability when the remaining time until expiration of the timer of the survival time is less. This can prevent the timer of the survival time from expiring.

The embodiments and the modifications are mere exemplifications, and can be freely combined. The arbitrary constituent elements of the embodiments and the modifications can be appropriately modified or omitted.

For example, a subframe in the embodiments and the modifications is an example time unit of communication in the fifth generation base station communication system. The subframe may be configured per scheduling. The processes described in the embodiments and the modifications as being performed per subframe may be performed per TTI, per slot, per sub-slot, or per mini-slot.

For example, the methods disclosed in the embodiments and its modifications may be applied not only to the vehicle-to-everything (V2X) services but also to services using the SL communication. The SL communication may be applied to various services including, for example, the proximity-based service, public safety, communication between wearable devices, and Device-to-Device communication in factories. The methods disclosed in the embodiments and its modifications may be applied to the SL communication to be used in such various services.

While the present invention is described in detail, the foregoing description is in all aspects exemplifications and does not restrict the present invention. Therefore, numerous modifications and variations that have not yet been exemplified can be devised without departing from the scope of the present invention.

The embodiments can be freely combined, and appropriately modified or omitted within the scope of the present invention.

## Claims

1. A communication system, comprising:
- a communication terminal; and
- a plurality of networks configured to perform radio communication with the communication terminal,
- wherein a priority of at least one of a paging timing and a paging type is assigned to a paging to be transmitted from each of the plurality of networks, and
the communication terminal is configured to select a corresponding one of the pagings to be received, based on the priority.

2. The communication system according to claim 1,
wherein the priority of the paging timing is assigned to each paging frame, each paging occasion, or each Physical Downlink Control Channel (PDCCH) monitoring occasion to be used for receiving the paging.

3. The communication system according to claim 1 or 2,
wherein the priority of the paging timing is associated with the priority of the paging type, and
each of the plurality of networks is configured to select a corresponding one of the pagings to be transmitted, based on the association between the priority of the paging timing and the priority of the paging type.

4. The communication system according to one of claims 1 to 3,
wherein the priority of one of the plurality of networks is associated with the priority of another one of the plurality of networks.

5. A communication terminal configured to perform radio communication with a plurality of networks,
wherein a priority of at least one of a paging timing and a paging type is assigned to a paging to be transmitted from each of the plurality of networks, and
the communication terminal is configured to select a corresponding one of the pagings to be received, based on the priority.

6. A network configured to perform radio communication with a communication terminal,
wherein priorities of a paging timing and a paging type are assigned to a paging to be transmitted from the network,
the priority of the paging timing is associated with the priority of the paging type, and
the network is configured to select the paging to be transmitted, based on the association between the priority of the paging timing and the priority of the paging type.
